# EUROPÄISCHE PATENTSCHRIFT

(11) **EP 3 840 916 B1**
(45) Veröffentlichungstag und Bekanntmachung des Hinweises auf die Patenterteilung: **17.01.2024**
(21) Anmeldenummer: 19755912.3
(22) Anmeldetag: 19.08.2019
(51) Int. Cl.: B23Q 17/24

(54) **WERKZEUGKONTROLLE IN EINER WERKSTÜCKBEARBEITUNGSMASCHINE**
TOOL-CHECKING DEVICE IN A WORKPIECE PROCESSING MACHINE
CONTRÔLE D'OUTIL DANS UNE MACHINE D'USINAGE DE PIÈCES OUVRÉES

(30) Priorität: 22.08.2018 DE 102018006653
(43) Veröffentlichungstag der Anmeldung: 30.06.2021
(73) Patentinhaber: Blum-Novotest GmbH, 88287 Grünkraut (DE)
(72) Erfinder: STAUBER, Steffen, 88267 Vogt (DE); RIEDTER, Bruno, 88250 Weingarten (DE)
(74) Vertreter: Schmidt, Steffen J.
(86) Internationale Anmeldenummer: PCT/EP2019/072156
(87) Internationale Veröffentlichungsnummer: WO 2020/038894

(56) Entgegenhaltungen:
- WO-A1-01/28737
- WO-A1-2004/056528
- DE-A1- 10 140 822
- DE-A1-102005 043 659
- DE-A1-102013 011 307

## Beschreibung

### Hintergrund

Hier werden ein Verfahren und eine Vorrichtung zur Kontrolle / Vermessung eines Werkzeugs beschrieben. Details hierzu sind in den Ansprüchen definiert; aber auch die Beschreibung und die Zeichnung enthalten relevante Angaben zur Struktur und zur Funktionsweise sowie zu Varianten des Verfahrens und den Vorrichtungskomponenten.

Zur Realisierung der Vorrichtungsaspekte und zur Ausführung der Verfahrensaspekte kann das Werkzeug zur dessen Rotation und Bewegung relativ zu einem Werkstück in einer Werkstückbearbeitungsmaschine aufgenommen sein. Die Werkstückbearbeitungsmaschine kann eine (numerisch gesteuerte) Werkzeugmaschine (NC-Maschine), ein (Mehrachsen-)Bearbei-tungszentrum, eine (Mehrachsen-)Fräsmaschine oder dergl. sein. Nachstehend wird für alle diese oder derartigen Maschinen auch der Begriff Werkzeugmaschine verwendet. Eine solche Maschine hat eine Spindel, an der ein Werkzeug oder ein Werkstück montiert ist. Die Spindel kann fest positioniert oder zum Beispiel in drei orthogonalen Richtungen X, Y, Z innerhalb eines Arbeitsraums der Maschine bewegt und zur Rotation um diese Achsen angetrieben werden.

In ein Werkzeugmagazin der Werkzeugmaschine eingesetzte Werkzeuge müssen vor ihrer ersten Verwendung in einem Bearbeitungsprozess in Länge und Radius sowie weiterer relevanter Parameter präzise vermessen werden. Die bei Spindeldrehzahl ermittelten Werkzeugdaten werden dabei automatisch unter einer spezifischen Werkzeugnummer in die Werkzeugtabelle der NC-Steuerung eingetragen. Anschließend sind die Werkzeugdaten bei jedem Einsatz dieses Werkzeugs bekannt und für die Bearbeitung verfügbar.

Das Werkzeug kann durch die Werkzeugmaschine in einen Mess-Raum, einen zur Messung festgelegten Bereich, eines Mess-Strahls bewegt werden. Der Mess-Strahl detektiert die Nähe der Oberfläche beispielsweise mit einer kapazitiven, induktiven oder optischen Einrichtung. Mit Hilfe des Mess-Strahls werden entsprechende Messdaten erzeugt und an eine Steuerung weitergeleitet, die ein Computerprogramm enthalten kann. Aus der Positionsinformation der Werkzeugmaschine und den Messdaten der Mess-Vorrichtung kann die (numerische) Steuerung die genauen Abmessungen des Werkzeugs ermitteln.

### Stand der Technik

Aus der DE 101 40 822 A1 ist ein Verfahren und eine Vorrichtung zur Positionsbestimmung von drehantreibbaren Werkzeugen bekannt, das den Moment verwendet, in dem das zu vermessende Werkzeug und ein Mess-Strahl sich voneinander trennen. Dazu wird das Werkzeug so in dem Messstrahl positioniert, dass dessen Strahlengang unterbrochen wird, also das Werkzeug den Mess-Strahl wenigstens teilweise abschattet. Eine Unterbrechung des Mess-strahles liegt vor, wenn der Mess-Strahl vollständig von dem Werkzeug blockiert wird oder eine Lichtmenge durchgelassen wird, die einen vorbestimmten Grenzwert unterschreitet. Der Grenzwert ist in Abhängigkeit der Lichtmenge definiert, die mindestens erforderlich ist, um mittels eines für den Mess-Strahl verwendeten Empfängers ein Signal auszugeben, das den Empfang des Mess-Strahles angibt. Eine Unterbrechung kann gegeben sein, wenn eine Teilabschattung des Mess-Strahles durch das Werkzeug zu einer durchgelassenen Lichtmenge von 50% der ausgesendeten Lichtmenge führt.

Zur Festlegung der Ausgangsposition werden die bekannten, ungefähren Maße des zu vermessenden Werkzeuges verwendet, oder das Werkzeug wird durch Aktivierung einzelner oder mehrerer Achsen der Werkzeugmaschine in Art einer Suchbewegung so lange bewegt, bis sich das Werkzeug in dem Mess-Strahl befindet. Währenddessen oder danach wird das Werkzeug gedreht. Anschließend wird das Werkzeug relativ zu dem Mess-Strahl mit einer gewählten, möglichst konstanten Geschwindigkeit in Richtung von diesem weg bewegt. Dabei wird das Werkzeug zu einer Mess-Position bewegt, in der der Mess-Strahl von dem Werkzeug nicht mehr unterbrochen wird, d.h. das Werkzeug von dem Mess-Strahl getrennt wird. Der Moment der Trennung wird dann erreicht, wenn die Unterbrechung des Mess-Strahles durch das Werkzeug zu einer Abschattung führt, bei der die durchgelassene Lichtmenge für eine Auslösung eines Signals des Empfängers ausreicht. Die Mess-Position wird, beispielsweise unter Verwendung von durch eine Steuerung einer Werkzeugmaschine ermittelten Achsenpositionen erfasst und zum Ermitteln einer Position für das Werkzeug verwendet. Die Mess-Position wird erfasst, wenn der Mess-Strahl für wenigstens eine Umdrehung des Werkzeuges nicht unterbrochen wird.

Die DE 10 2013 011 307 A1 betrifft ein Verfahren zum Vermessen eines in einer Werkzeugmaschine aufgenommenen Werkzeugs mit wenigstens einer Schneide oder Kante, mit den Schritten: Bereitstellen einer Mess-Vorrichtung, aufweisend einen Laserstrahler und einen Laserstrahlempfänger zur berührungslosen Abtastung eines Werkzeugs mittels eines von dem Laserstrahler zu dem Laserstrahlempfänger gesandten Mess-Strahls, wobei der Laserstrahlempfänger ein für ein Maß einer Abschattung des Mess-Strahls bei der Abtastung des Werkzeugs mittels des Mess-Strahls repräsentatives Signal ausgibt; Bereitstellen einer Auswerteeinrichtung zum Empfangen und Verarbeiten des wenigstens einen Signals, um dieses Signal zu verarbeiten und ein Ausgangssignal auszugeben; Einführen des Werkzeugs in den Mess-Strahl so, dass eine zu messende wenigstens eine Schneide oder Kante des Werkzeugs, während dieses rotiert, in den Mess-Strahl eintaucht und wieder verlässt; Erzeugen des Ausgangssignals, das ein Ergebnis eines Vergleichens des wenigstens einen Signals mit dem Schwellenwert repräsentiert; Verändern des Maßes einer Stellgröße in der Auswerteeinrichtung und/oder der Mess-Vorrichtung um das Signal oder den Schwellenwert umzuformen; Mehrfaches Wiederholen der Schritte: Rotieren des Werkzeugs in dem Mess-Strahl, Erzeugen des Ausgangssignals, und Verändern des Maßes einer Stellgröße; Auswerten des Maßes der Stellgröße, bei dem das Ausgangssignal eine charakteristische Größe annimmt.

Diese Vorgehensweise verkürzt die Mess-Zeit bisher bekannter Verfahren, bei denen in der Regel das Werkzeug relativ zum Messstrahl verfahren wird. Beim Einwechseln des Werkzeugs in die Spindel der Werkzeugmaschine wird ein Korrekturwert in der numerischen Steuerung ausgewählt. Die Werkzeuglänge wird aus dem Werkzeugspeicher eingelesen, damit das Werkzeug entsprechend positioniert werden kann. Die Messung kann dann drückend oder ziehend erfolgen, auch orientiert und stehend. Das Ergebnis der Messung der Werkzeuglänge wird dann mit den Daten im Werkzeugspeicher verglichen. Wenn die Werkzeuglänge nicht innerhalb der Bruchtoleranz liegt, wird eine Fehlermeldung ausgegeben.

Die DE 1 99 503 31 A1 betrifft ein Verfahren zum Prüfen einer Schneidengeometrie eines drehantreibbaren Werkzeugs, mit einem Mess-System, mit folgenden Schritten: Festlegen eines zu prüfenden Bereichs auf dem Werkzeug; Drehen des Werkzeugs mit einer gewählten Drehzahl; Aussenden eines Mess-Strahls, der einen Mess-Bereich festlegt; Positionieren des Werkzeugs, so dass eine durch die Drehung entstehende Hüllfläche seines zu prüfenden Bereichs in den Mess-Bereich eintaucht; und Detektieren von Signalen, die Wechselwirkungen des Mess-Strahls mit Hindernissen auf seinem Ausbreitungsweg angeben. Dabei werden Soll-Zeitpunkte bestimmt, an denen ein dem zu prüfenden Bereich entsprechender Bereich eines eine Soll-Teilung aufweisenden Referenzwerkzeugs in den Mess-Bereich eintaucht. Das Mess-System wird mit der Drehung des Werkzeugs synchronisiert. Das Detektieren wird nachfolgend während gewählter Detektions-Zeitintervalle durchgeführt, die die Soll-Zeitpunkte umfassen.

Die WO2004/056528A1 betrifft eine Werkzeuganalysevorrichtung zur Verwendung an einer Werkzeugmaschine, mit einem Lichtsender und einem Lichtempfänger, wobei der Lichtempfänger Licht von dem Lichtsender empfängt und ein die empfangene Lichtmenge angebendes Signal erzeugt. Ein Wandler dient zur Bereitstellung von Daten, die eine numerische Darstellung des von dem Empfänger erzeugten Signals enthalten. Diese Daten werden verarbeitet und ein Ausgangssignal erzeugt, wenn die Daten mit einer vorbestimmten Bedingung übereinstimmen. Die vorbestimmte Bedingung repräsentiert eine Abfolge von Abweichungen in dem Licht von dem Lichtsender, das an dem Lichtempfänger empfangen wird, wobei die minimalen und/oder maximalen Werte im Wesentlichen mit einer Kurve eines erwarteten Typs übereinstimmen.

DE 10 2005 043659 A1 offenbart ein Verfahren nach dem Oberbegriff von Anspruch 1.

Diese herkömmlichen Vorgehensweisen dauern relativ lange und sind der Produktivität der Werkzeugmaschine abträglich.

Bisherige Vorgehensweisen erlauben keine schnelle und präzise Messung aller Schneidenlängen eines Werkzeugs in einem einzigen Mess-Vorgang / einer einzigen Mess-Bewegung in einem fokussierten (Laser-)Lichtstrahl eines berührungslosen Mess-Systems, um die Rundlaufeigenschaften des Werkzeugs in der Spindel zu beurteilen. Sie sind lediglich in der Lage, die längste oder kürzeste Schneide eines Werkzeugs über einen Schaltpunkt zu bestimmen. Eine Korrektur des Schaltpunkts ist nicht möglich. Dabei sind mehrere Mess-Bewegungen mit sukzessive reduzierten Vorschubgeschwindigkeiten notwendig, um die längste Schneidenlänge zu ermitteln. Zusätzliche Mess-Bewegungen sind erforderlich, um die kürzeste Schneidenlänge zu ermitteln. Die längste und die kürzeste Schneidenlänge können nicht in einem Mess-Vorgang / einer Mess-Bewegung gleichzeitig ermittelt werden. Die Messung aller Schneidenlängen eines Werkzeugs mit Hilfe eines Lasermesssystems in einem einzelnen Mess-Vorgang ist bisher nicht möglich.

Für eine Messgenauigkeit im µm-Bereich ist die Vorschubgeschwindigkeit des Werkzeugs bei der Mess-Bewegung auf das gewünschte Vorschub/Drehzahl-Verhältnis anzupassen. Dies erhöht die Messdauer. Zur Bestimmung der Schneidenlängen des Werkzeugs mit einer Genauigkeit von zum Beispiel < *1 µm* ist das Vorschub/Drehzahl-Verhältnis auf < *1 µm pro Umdrehung des* Werkzeugs einzustellen. Mit anderen Worten darf die Vorschubbewegung für die zu betrachtenden Schneiden 1 *µm pro Umdrehung* des Werkzeugs nicht überschreiten. Bei einer Spindeldrehzahl von *5 = 3000 min⁻¹* darf die Vorschubgeschwindigkeit des Werkzeugs *F = 3 mm* / *min* nicht überschreiten, um die Auflösung *A* von *1µm* zu gewährleisten (*A = F*/*S*)*.* Störungen durch Kühlmittel oder Werkstoffspäne beeinflussen die Genauigkeit des Messergebnisses. Bisherige Messmethoden sind nicht in der Lage, solche Störungen ausreichend zuverlässig aus dem Messergebnis herauszufiltern bzw. zu eliminieren.

### Zugrundeliegendes Problem

Die Längen einiger oder aller Schneiden eines Werkzeugs in einer Werkzeugmaschine sollen durch einen einzigen Mess-Vorgang vorzugsweise mit Hilfe eines berührungslosen (Laserlicht-)Mess-Systems bestimmt werden. Vorzugsweise liegt am Ende des Mess-Vorgangs eine absolute Referenz-Position oder -Länge vor, die sich auf die längste Schneide bezieht. Die hier vorgestellte Vorgehensweise / Anordnung soll den Zeitbedarf pro Mess-Vorgang bei hoher Mess-Genauigkeit reduzieren.

### Vorgeschlagene Lösung

Die hier vorgestellte Mess-Bereichserweiterung ermöglicht das Messen aller Schneiden eines Werkzeugs durch Erweitern des nutzbaren analogen Mess-Bereichs einer Mess-Vorrichtung für die analoge Aufzeichnung der Schneidenlängen während der Messung. Ein dabei verwendetes Verfahren ist im Anspruch 1 definiert.

### Vorteile, Varianten, Eigenschaften

Um ein Maß der Abschattung einzelner Schneiden des Werkzeugs in einem (Laser-)LichtStrahl oder Mess-Strahl aufzuzeichnen, wird bei der hier vorgestellten Vorgehensweise der nutzbare analoge Mess-Bereich durch den Fokusdurchmesser des Mess-Strahls vorgegeben und begrenzt. Für präzise, hochaufgelöste Messungen [µm/Digit] ist ein kleiner Durchmesser des Mess-Strahls vorteilhaft. Bisher wurde eine analoge Aufzeichnung unterschiedlich langer Schneiden in einem gebündelten oder kohärenten Mess-Strahl mit einem geringen Durchmesser an einer festen Messposition als nachteilig erachtet, da der nutzbare Mess-Bereich eingeschränkt ist. Der Versuch alle Schneidenlängen mit einer analogen Aufzeichnung an einer festen Messposition zu erfassen, liefert bei großen Unterschieden in den Schneidenlängen aufgrund des eingeschränkten analogen Mess-Bereichs in den meisten Fällen kein vollständiges Ergebnis. In dieser Konstellation mit stark unterschiedlichen Schneidenlängen bei eingeschränktem Mess-Bereich sind bei einer festen Messposition entweder nur die maximalen Abschattungssignale der kürzeren Schneiden im analogen Mess-Bereich sichtbar oder die maximalen Abschattungssignale der längeren Schneiden sichtbar, aber selten alle Schneiden gleichzeitig in dem an der festen Messposition betrachteten Mess-Bereich. Um das in der Auswerteeinheit ermittelte Ergebnis einer analogen Aufzeichnung mit Bewegung zu einem Bezug im Maschinenkoordinatensystem zu bringen, ist deshalb eine Referenzmessung mit Schaltpunkt hilfreich.

Derart in Bezug auf eine Schneide oder Kante des Werkzeugs (oder eines Werkstücks) erzeugte Ausgangssignale können bei der hier vorgestellten Vorgehensweise dann in der Auswerteeinrichtung direkt oder in einer nachgeordneten Steuerungseinheit ausgewertet werden. Dies geschieht in einer Variante mit den Schritten: Erzeugen eines Schaltpunkts aus den resultierenden repräsentativen Abschattungssignalen, und Ausgeben des Schaltpunkts an eine Maschinensteuerung der Werkzeugmaschine.

Die Kombination aus analoger Datenaufzeichnung und dem Generieren eines Schaltpunkts zur Vermessung von Werkzeugen erlaubt bei der hier vorgestellten Vorgehensweise auch die Berechnung einer etwaigen Mess-Ungenauigkeit, die durch das Vorschub/Drehzahl-Verhältnis im Schaltpunkt auftreten kann. Durch die Kenntnis der Mess-Ungenauigkeit und deren Signalisierung an die NC-Steuerung der Werkzeugmaschine lässt sich die Präzision der Messung auf das gewünschte Maß bringen.

Der bei der hier vorgestellten Vorgehensweise ausgegebene Schaltpunkt kann mit Hilfe eines Vergleichs des Zeitpunktes der Schaltpunktausgabe und der berechneten Länge der Schneide mittels Verarbeitungsstufen und weiteren Auswertungen optimiert werden. Ein etwaiger Fehler aufgrund des Vorschub/Drehzahl-Verhältnisses kann dabei ebenfalls dokumentiert und kompensiert werden.

Diese hier vorgestellte Vorgehensweise verkürzt die lange Mess-Zeit bisher bekannter Verfahren, bei denen das Werkzeug relativ zum Messstrahl verfahren wird. Die hier vorgestellte Vorgehensweise hat den Vorteil, dass das relativ langsame Bewegen des Werkzeugs relativ zum Laserstrahl durch die hier vorgestellten Schritte wesentlich schneller ausführbar ist, ohne einen Verlust bei der Messgenauigkeit zu erhalten.

Die unterschiedlichen Längen der Schneiden des Werkzeugs werden in einem Messvorgang erfasst. Dazu wird das rotierende Werkzeug zunächst so im Mess-Strahl positioniert, dass alle Schneiden vollständig in den Lichtstrahl eintauchen und diesen vollständig abschatten/unterbrechen. In dieser Stellung des Werkzeugs ist der verfügbare analoge Mess-Bereich im unteren Spannungsbereich dauerhaft oder periodisch unterschritten. Ausgehend von dieser Startposition wird das - mit derselben oder einer anderen Drehzahl *S* - rotierende Werkzeug mit einer konstanten Vorschubgeschwindigkeit v aus dem Lichtstrahl heraus bewegt. Diese Drehzahl *S* und die konstante Vorschubgeschwindigkeit *v* wird der Mess-Vorrichtung signalisiert, und ggf. - sofern in der Steuerung bekannt - auch die Anzahl der Schneiden K des Werkzeugs.

Aus der bekannten Drehzahl *S [min⁻¹]* und der daraus resultierenden Zeitkonstanten *T = 1* / *S [min]* für eine Umdrehung des Werkzeugs, sowie der konstanten Vorschubgeschwindigkeit *v [mm*/*min]* des Werkzeugs kann in der Mess-Vorrichtung oder einer nachgeordneten Steuerung das beim Eintauchen der Schneiden des Werkzeugs erzeugte Abschattungssignal örtlich und zeitlich präzise erfasst und zugeordnet werden. Durch die kontinuierliche Bewegung des Werkzeugs mit der konstanten Vorschubgeschwindigkeit *v* aus dem Mess-Strahl heraus, verändert sich die Position der einzelnen Schneidenlängen relativ zum analogen Mess-Bereich im zeitlichen Abstand einer Zeitkonstanten *T* nach jeder vollständigen Umdrehung des Werkzeugs. Den Zusammenhang zwischen der Positionsänderung *deltaS* der Schneide im analogen Mess-Bereich und einer vollständigen Umdrehung des Werkzeugs beschreibt die Beziehung *deltaS = v* * *T[µm].*

Solange alle Schneiden des Werkzeugs den analogen Mess-Bereich noch vollständig unterschreiten, ist eine präzise (Orts-/Längen-)Bestimmung der Schneiden noch nicht möglich.

Erst wenn eine Schneide den analogen Mess-Bereich nicht mehr vollständig unterschreitet, also wenn sich das erzeugte maximale Abschattungssignal innerhalb des analogen Mess-Bereichs befindet, ist eine präzise (Orts-/Längen-)Bestimmung der Schneiden möglich.

Als maximales Abschattungssignal ist hier der Bereich des Abschattungssignals verstanden, der hervorgerufen wird, wenn die Spitze oder außenliegende Kante eines Werkzeugs am weitesten in den Mess-Strahl eintaucht.

Deshalb beginnt die zeitliche und örtliche Aufzeichnung mit Auswertung der Abschattungssignale erst, wenn die erste (kürzeste) Schneide einen unteren Schwellwert im analogen Mess-Bereich nicht mehr unterschreitet (Zeitpunkt *t0 = 0 [µs, min]*)*.*

Die Vorschubgeschwindigkeit *v [mm*/*min]* wird im Verhältnis zum verfügbaren analogen Mess-Bereich (Querabmessung *D* des Mess-Strahls in Richtung der Bewegung des Werkzeugs (bei einem kreisrund fokussierten Mess-Strahl ist das dessen Durchmesser) abzüglich eines unteren und eines oberen Grenzbereichs) so gewählt, dass jede Schneide über mindestens eine oder mehrere Umdrehungen *N* (zum Beispiel *N =1 - 16,* vorzugsweise *N = 8* Umdrehungen an versetzten Positionen im analogen Mess-Bereich den Mess-Strahl abschattet. Die pro Umdrehung ermittelten maximalen Abschattungssignale dieser Schneide unterscheiden sich bei der hier vorgestellten Vorgehensweise entsprechend der zeitlichen Verschiebung und örtlichen Veränderung des Werkzeugs um eine - bei konstanter Vorschubgeschwindigkeit *v-* konstante Positionsänderung *deltaS = v* * *T [µm].*

Die für Bruchteile oder Vielfache von nicht vollständigen Umdrehungen ermittelten maximalen Abschattungssignale unterscheiden sich bei der hier vorgestellten Vorgehensweise entsprechend der zeitlichen Verschiebung und örtlichen Veränderung des Werkzeugs um eine - bei konstanter Vorschubgeschwindigkeit *v*-zeitabhängige relative Positionsänderung *deltaS(t) = v* * *(tk* - *t0) = v* * *t = v* * *N* * *T[µm],* wobei *t0 = 0 [µs, min]* den Zeitpunkt des Beginns der Aufzeichnung mit Auswertung kennzeichnet, *tk > t0 [µs, min]* der zu betrachtende Zeitpunkt mit einem maximalen Abschattungssignal einer Schneide K ist, *t [µs, min]* die verstrichene Zeitdauer seit dem Zeitpunkt *t0* ist*, N [ohne Einheit]* die Anzahl der vollständigen und/oder Bruchteilen von Umdrehungen seit Beginn der Aufzeichnung mit Auswertung zum Zeitpunkt *t0 = 0 [µs, min]* ist*, T = 1* / *Drehzahl[min⁻¹]* des Werkzeugs, und *v [mm*/*min]* die Vorschubgeschwindigkeit des Werkzeugs ist. Bei nicht vollständigen Umdrehungen kann der Wert *N* anstelle eines positiven Ganzzahlwertes (*N=0, 1, 2, 3,* ...) auch einen positiven Wert aus dem Bereich der Rationalen Zahlen annehmen (*N* = *(tk - t0)* / *T mit N >= 0*)*.* So können die Mess-Werte jedes beliebigen Zeitpunktes *tk [µs, min]* bzw*.* jeder Umdrehung *N* in Beziehung zueinander gesetzt und zu einem resultierenden repräsentativen Mess-Wert für diese / jede Schneide überlagert werden.

Bei der hier vorgestellten Vorgehensweise durchlaufen alle Schneiden des Werkzeugs über mindestens eine oder mehrere Umdrehungen den analogen Mess-Bereich des Mess-Strahls. Die resultierenden repräsentativen Messwerte der anderen Schneiden können in Relation zu der längsten Schneide und zueinander bestimmt werden. Mit anderen Worten kann der relative Abstand von jeder Schneide zu ihrer nachfolgenden Schneide durch den konstanten Versatzbetrag bestimmt (berechnet, graphisch ermittelt) werden und mit den tatsächlichen Messwerten der anderen Schneiden verglichen und kontrolliert werden.

Erreicht die letzte (längste) Schneide des Werkzeugs eine obere Schaltschwelle im analogen Mess-Bereich, wird die zeitliche und örtliche Aufzeichnung der Abschattungssignale mit der Ausgabe eines Schaltsignals an die Maschinensteuerung für die Referenzmessung beendet. Diese Schaltpunktposition dient als Referenz zur Berechnung der absoluten Länge der letzten (längsten) Schneide. Da die resultierenden repräsentativen Mess-Werte der kürzeren Schneiden in Relation zur letzten (längsten) Schneide ebenfalls ermittelt werden, kann auch jede dieser Schneidenlängen absolut und nicht nur relativ bestimmt werden.

Bei der hier vorgestellten Vorgehensweise durchlaufen alle Schneiden des Werkzeugs über mindestens eine oder mehrere Umdrehungen den analogen Mess-Bereich des Mess-Strahls. Das Erzeugen des Schaltpunkts aus den resultierenden repräsentativen Abschattungssignalen, und das Ausgeben des Schaltpunkts an die Maschinensteuerung der Werkzeugmaschine erfolgt, wenn die letzte (längste) Schneide die obere Schaltschwelle des Mess-Bereichs überschritten / verlassen hat. Der Zeitpunkt der Ausgabe des Schaltpunkts wird in der Maschinensteuerung der Werkzeugmaschine oder in der Mess-Vorrichtung gespeichert um für eine etwaige spätere Schaltpunktkorrektur verfügbar zu sein.

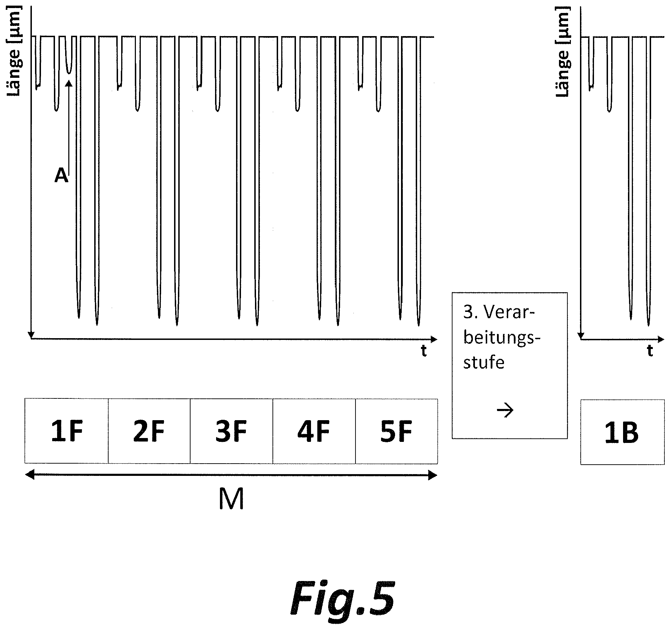

Zu jedem Zeitpunkt, an dem für eine Schneide die maximale Abschattung des Mess-Strahls erkannt wird, startet in der Auswerteeinrichtung oder einem der Mess-Vorrichtung nachgelagerten Prozessor eine Uhr mit einer Erwartungszeit *E [µs] = 1.1 * 10⁶ * 60[s*/*min]* / *S[1*/*min]* d.h. *E [µs] = 1.1 * T [µs] die* der nächsten maximalen Abschattung durch dieselbe Schneide nach einer weiteren vollständigen Umdrehung entspricht. Dabei ist *E* abhängig von S, der Drehzahl des Werkzeugs pro Minute bzw. der daraus berechneten Zeit T für eine vollständige Umdrehung. Diese Uhr wird solange zurückgesetzt und erneut gestartet (getriggert), wie eine weitere oder dieselbe Schneide eine Abschattung des Mess-Strahls hervorruft. Wenn die Uhr abläuft, genauer gesagt, wenn die maximalen Abschattungssignale aller Schneiden des Werkzeugs im Mess-Strahl oberhalb der oberen Schaltschwelle liegen und somit keine weitere Abschattung des Mess-Strahls erfasst wurde, wird der Schaltpunkt ausgegeben. Die Zeitdauer zwischen dem letzten neu starten der Uhr und der Ausgabe des Schaltpunkts entspricht der Erwartungszeit E, welche in Fig. 5 als Zeitspanne t_{Kontroll} angegeben ist.

Bei einer Variante der hier vorgestellten Vorgehensweise werden während der Bewegung des Werkzeugs im Mess-Strahl erfasste, im Abschattungssignal vorhandene Informationen ausgeblendet. In einer der Varianten dient eine erste Verarbeitungsstufe zur Eliminierung einer Klasse nicht relevanter Informationen im Abschattungssignal. Diese Klasse nicht relevanter Informationen im Abschattungssignal hat ihren Tiefpunkt nicht zwischen der oberen und der unteren Schaltschwelle des Mess-Bereichs. Solche Informationen werden aus dem Abschattungssignal eliminiert, herausgefiltert. Die Länge einer Schneide kann nur ermittelt werden, wenn der Tiefpunkt, die Spitze der Schneide, innerhalb des Messstrahls sichtbar ist.

In einer weiteren Variante der hier vorgestellten Vorgehensweise wird in einer zweiten Verarbeitungsstufe ein Ausgangs-Signal(-zug), enthaltend Abschattungssignale aus M Umdrehungen des Werkzeugs, aus einem Eingangs-Signal(-zug) gebildet, enthaltend Abschattungssignale aus U Umdrehungen, wobei gilt U >= M. In einer Variante werden für jeden Wert im Ausgangs-Signal(-zug) mehrere zeitlich korrespondierende Werte des Eingangs-Signal(-zug)s zu einem Wert zusammengefasst. So wird ein Ausgangs-Signal der Länge *M* Umdrehungen des Werkzeugs aus einem Eingangs-Signal der Länge *U* Umdrehungen gebildet. Für jeden Wert im Ausgangs-Signal der Verarbeitungsstufe stehen ein oder mehrere Werte, zum Beispiel drei oder vier Werte, die zu unterschiedlichen Zeitpunkten und an unterschiedlichen Positionen des Werkzeugs aufgezeichnet wurden, zur Verfügung. Dazu werden diese Werte in der zweiten Verarbeitungsstufe zu einem Wert zusammengefasst. Daten mit relevanten Informationen werden in einer Variante linearisiert und von Digit-Werten in µm-Werte umgerechnet. Außerdem wird für jeden relevanten Messwert die örtliche Veränderung mit Hilfe der zeitlichen Positionsänderung *deltaS* berücksichtigt.

In einer weiteren Variante der hier vorgestellten Vorgehensweise werden in einer dritten Verarbeitungsstufe singuläre Störungen aus der Abfolge der Abschattungssignale jeder Schneide eliminiert. Auf diese Weise werden nur sich wiederholende Ereignisse, also die regelmäßige Abschattung des Mess-Strahls durch die Schneiden zur Auswertung herangezogen. Mit Hilfe der dritten Verarbeitungsstufe können diese sich wiederholenden Ereignisse von Einzelereignissen, wie zum Beispiel einem am Werkzeug anhaftenden Kühlmitteltropfen oder einem Fräs-Span, unterschieden und zur Weiterverarbeitung ausgegeben werden.

Dazu werden in einer Variante die Abschattungssignale auf wiederkehrende Ereignisse untersucht um deren Periodizität zu erkennen. Anschließend werden einer Umdrehung des Werkzeugs entsprechende Abfolgen der Abschattungssignale als Signalblöcke zusammengefasst und mit den Abfolgen der Abschattungssignale einer oder mehrerer folgender Umdrehungen des Werkzeugs übereinandergelegt. Hieraus werden zu jedem Abtastzeitpunkt die einzelnen Signalwerte in den Abfolgen der Abschattungssignale miteinander verglichen, jeweils das Minimum ausgewählt, wobei die mathematische Art für die Auswahl des Wertes zu einem Abtastzeitpunkt sich unterscheiden kann und auch durch Maximum, Mittelwert, Median oder ähnlichen Methoden realisiert sein kann, und als Ausgangs-Wert der dritten Verarbeitungsstufe ausgegeben. So wird eine Störung in Form zum Beispiel eines Kühlmitteltropfen ausgeblendet, da nur sich in allen Signalblöcken wiederholende Ereignisse, die also in allen Signalblöcken vorkommen, zu den Ausgangs-Werten hinzugefügt werden.

Durch Anwendung dieser Verarbeitungsstufen wird ein Mess-Signal, das bei der Bewegung des Werkzeugs in einem kleinen Mess-Bereich, dem fokussierten Mess-Strahl, aufgenommen wird, in einen größeren Mess-Bereich gespreizt. Die Berechnung der Länge der einzelnen Schneiden erfolgt unter Betrachtung der letzten (längsten) Schneide als Referenz, mit der relativen Länge = 0, und der Betrachtung der Differenzen der übrigen Schneiden hierzu.

Aufgrund des Vorschub/Drehzahl-Verhältnisses hat der an die Maschinensteuerung ausgegebene Schaltpunkt einen Fehler und entspricht nicht dem Maß für die Länge der letzten (längsten) Schneide. Mit Hilfe der berechneten Längen und dem Zeitpunkt der Schaltpunktauslösung wird bei diesem Verfahren dieser Fehler korrigiert.

Der oben erwähnte zeitliche Fehler bei der Ausgabe des Schaltpunkts aufgrund des Vorschub-/Drehzahl-Verhältnisses entsteht durch die Differenz zwischen der oberen Schaltschwelle und der Eintauchtiefe / Länge der schaltpunktauslösenden Schneide beim letzten Trigger-Zeitpunkt. Hier wird die Länge jeder Schneide berechnet, also auch die Länge der Schneide, für die der Schaltpunkt zur Maschinensteuerung ausgegeben wird. Berechnet man für den Zeitpunkt der Schaltpunktausgabe eine Länge und vergleicht diesen Wert mit der Schneide für die dieser Schaltpunkt ausgegeben wurde, erhält man den Fehler durch das Vorschub-/Drehzahl-Verhältnis, sowie die in der Mess-Vorrichtung bekannten Abweichungen durch die um die Erwartungszeit E verzögerte Ausgabe des Schaltpunkts und den bekannten Versatz zwischen der kalibrierten Schaltpunktschwelle, zum Beispiel bei 50% Lichtintensität am Lichtstrahlempfänger, und der bei diesem Verfahren verwendeten oberen Schaltpunktschwelle, zum Beispiel bei 90% Lichtintensität am Lichtstrahlempfänger. Dieser Fehler wird der Maschinensteuerung als Korrekturwert mitgeteilt.

Die (Laser-)Mess-Vorrichtung und die Maschinensteuerung der Werkzeugmaschine kommunizieren bei der hier vorgestellten Vorgehensweise drahtlos oder über eine Datenleitung, zum Beispiel PROFIBUS, um notwendige Informationen und Signale auszutauschen. Die Maschinensteuerung der Werkzeugmaschine signalisiert für die Messung relevante Parameter, wie Drehzahl und Vorschubgeschwindigkeit des Werkzeugs und ggf. auch die Anzahl der Schneiden des Werkzeugs an die Mess-Vorrichtung. Die Mess-Vorrichtung signalisiert von ihr ermittelte Ergebnisse an die Maschinensteuerung.

Durch das analoge Abtasten und Erfassen des Abschattungssignals für jede Schneide während sich diese mit konstanter Drehzahl und konstanter Vorschubgeschwindigkeit durch den Mess-Strahl bewegt, wird bei der hier vorgestellten Vorgehensweise der nutzbare Mess-Bereich für die analoge Aufzeichnung der Längen der Schneiden gespreizt. Im Gegensatz zu bisherigen Messungen mit Schaltpunkt, bei denen die Genauigkeit durch das Vorschub/Drehzahl-Verhältnis vorgegeben ist, so dass für präzise Messungen die Vorschubgeschwindigkeit reduziert werden muss, wodurch sich die Messdauer erhöht, wird bei der hier vorgestellten Vorgehensweise das Ergebnis einer analogen Aufzeichnung zum Maschinenkoordinatensystem in Bezug gesetzt, indem aus der analogen Datenaufzeichnung bei der Vermessung von Werkzeugen ein Schaltpunkt generiert wird.

So können durch die wesentlich kürzere Dauer der einzelnen Messungen in der gleichen Zeit eine Vielzahl an Messungen mit der hier vorgestellten Vorgehensweise ausgeführt werden. Dies erhöht auch die Genauigkeit sowie die Messsicherheit.

Mit der hier vorgestellten Vorgehensweise ist auch eine Messung unter rauen Umgebungsbedingungen möglich. Wiederholte Messungen, wie sie bei herkömmlichen Verfahren erforderlich waren, sind mit der hier vorgestellten Vorgehensweise nicht mehr notwendig. Singuläre Störeinflüsse zum Beispiel durch Tropfen oder Späne können mit der hier vorgestellten Vorgehensweise zuverlässig ausgeblendet werden. Solche Störeinflüsse, die bei herkömmlichen Verfahren eine Fehlmessung verursacht haben, führen mit der hier vorgestellten Vorgehensweise nicht zu einer Störung. Mit der hier vorgestellten Vorgehensweise sind weniger Mess-bewegungen und Positionierungen des Werkzeugs relativ zum Mess-Strahl durch die Maschinensteuerung auszuführen. Daher können kürzere Messzeiten erreicht werden. Auch besteht mit der hier vorgestellten Vorgehensweise die Möglichkeit, einen an die Maschinensteuerung ausgegebenen Schaltpunkt zu korrigieren. Insgesamt wird mit der hier vorgestellten Vorgehensweise eine zuverlässige Bestimmung der Länge /Position aller Schneiden eines Werkzeugs bei Durchführung lediglich einer Messung erreicht.

In einem weiteren Aspekt wird hier eine Vorrichtung zum Kontrollieren eines in einer numerisch gesteuerten Werkzeugmaschine einzusetzenden Werkzeugs bereitgestellt. Diese Vorrichtung ist ausgestattet mit einer Mess-Vorrichtung, aufweisend einen Lichtstrahler, eingerichtet zum Abgeben eines Mess-Strahls für ein berührungsloses Abtasten des Werkzeugs mittels des Mess-Strahls, und einen Lichtstrahlempfänger, eingerichtet zum Empfangen des Mess-Strahls und zum Ausgeben eines für ein Maß einer Abschattung des Mess-Strahls durch das Werkzeug repräsentatives Abschattungssignals; sowie einer Auswerteeinrichtung, programmiert und eingerichtet zum Empfangen und Verarbeiten des Abschattungssignals aus dem Lichtstrahlempfänger; Empfangen und Verarbeiten eines Signals aus einer Steuerung der Werkzeugmaschine über das Rotieren des Werkzeugs und Bewegen des rotierenden Werkzeugs relativ zu dem Mess-Strahl; Veranlassen einer Mitteilung, an die Steuerung der Werkzeugmaschine, dass das Werkzeug eine Startposition erreicht, in der die oder jede Schneide des Werkzeugs in den Mess-Strahl soweit eintaucht und diesen dabei soweit abschattet, dass eine untere und eine obere Schaltschwelle eines Mess-Bereichs der Auswerteeinrichtung erreicht oder unterschritten ist; Veranlassen eines Bewegens des mit einer vorbestimmten Drehzahl rotierenden Werkzeugs mit einer zumindest annähernd konstanten Vorschubgeschwindigkeit, ausgehend von dieser Startposition aus dem Mess-Strahl heraus, und Erfassen des durch die oder jede Schneide des Werkzeugs beim Abschatten des Mess-Strahls erzeugten Abschattungssignals in Bezug auf sein örtliches und zeitliches Auftreten während des Herausbewegens des rotierenden Werkzeugs aus dem Mess-Strahl heraus; Ermitteln des Ereignisses, dass zumindest für eine Schneide des Werkzeugs das Abschattungssignal die untere Schaltschwelle des Mess-Bereichs nicht unterschreitet und die obere Schaltschwelle des Mess-Bereichs nicht überschreitet, so dass ein während des Bewegens des rotierenden Werkzeugs aus dem Mess-Strahl heraus erzeugtes maximales Abschattungssignal sich oberhalb der unteren und unterhalb der oberen Schaltschwelle des Mess-Bereichs befindet; wobei die Vorschubgeschwindigkeit im Verhältnis zum von einer Strahl-Querabmessung des Mess-Strahls abhängigen Mess-Bereich der Auswerteeinrichtung so bestimmt ist, dass wenigstens eine der Schneiden während einer für eine Auswertung ausreichenden Anzahl von Umdrehungen des rotierenden Werkzeugs an unterschiedlichen Positionen ein jeweiliges, oberhalb der unteren und unterhalb der oberen Schaltschwelle des Mess-Bereichs befindliches maximales Abschattungssignal hervorruft; bei jeder Umdrehung des rotierenden Werkzeugs die ermittelten maximalen Abschattungssignale jeder Schneide sich entsprechend der zeitlichen Verschiebung und örtlichen Veränderung des Werkzeugs um einen zumindest annähernd konstanten Versatzbetrag unterscheiden, und zu einem resultierenden repräsentativen Abschattungssignal für diese Schneide überlagert werden.

In einer oder mehreren Varianten ist bei dieser Vorrichtung die Steuerung dazu programmiert und eingerichtet ist, einen oder mehrere der oben stehenden Verfahrensschritte auszuführen.

Es sei verstanden, dass alle drei Verarbeitungsstufen bzw. die dort jeweils ausgeführten Datenverarbeitungen, oder auch nur zwei oder eine der Verarbeitungsstufen eingesetzt werden können, um die Qualität der Kontrolle/Messung zu verbessern.

### Kurze Beschreibung der Zeichnung

Weitere Einzelheiten, Merkmale, Ziele, Vorteile, Anwendungsmöglichkeiten, Vorteile und Wirkungen der vorliegend beschriebenen Verfahren und Vorrichtungen ergeben sich aus der nachfolgenden Beschreibung derzeit bevorzugter Varianten und den zugehörigen Zeichnungen.
Fig. 1 veranschaulicht in einer schematischen Darstellung eine Variante einer Mess-Situation mit der hier beschriebenen Lösung in einer numerisch gesteuerten Werkzeugmaschine.
Fig. 1a, 2 - 7 veranschaulichen Diagramme zu erfassten und verarbeiteten Signalverläufen.

### Detaillierte Beschreibung der Zeichnung

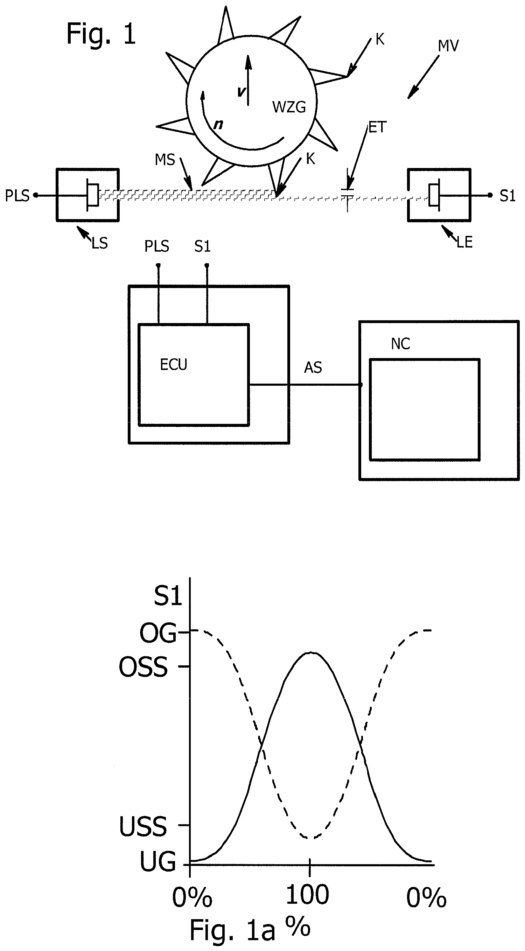

In Fig. 1 ist schematisch eine Vorrichtung zum Vermessen eines in einer Werkstückbearbeitungsmaschine aufgenommenen Werkzeugs WZG mit wenigstens einer Schneide oder Kante K veranschaulicht. Diese Vorrichtung hat eine Mess-Vorrichtung MV mit einem Laserstrahler LS, der dazu eingerichtet ist einen Mess-Strahl MS abzugeben, und einen zu dem Laserstrahler LS präzise ausgerichteten Laserstrahlempfänger LE. Der Laserstrahler LS ist dazu eingerichtet, den Mess-Strahl MS zu dem Laserstrahlempfänger LE zur berührungslosen Abtastung des Werkzeugs WZG zu senden, wenn ein entsprechendes Ansteuersignal zur Steuerung der Laserleistung PLS an dem Laserstrahler LS anliegt. Der Laserstrahlempfänger LE ist dazu eingerichtet, ein für ein Maß einer Abschattung des Mess-Strahls MS bei der Abtastung des Werkzeugs WZG mittels des Mess-Strahls MS repräsentatives Signal S1 auszugeben. Dieses repräsentative Signal S1 hat einen durchgehenden Wertebereich WB mit einer oberen Grenze OG und einer unteren Grenze UG. Zur sicheren Auswertbarkeit des repräsentativen Signals S1 in der Steuer- und Auswerteeinrichtung ECU wird der verwendete Wertebereich durch eine obere und eine untere Schaltschwelle OSS und USS eingegrenzt.

Letzteres ist auch in dem Diagramm der Fig. 1a veranschaulicht, bei der an der Ordinate das repräsentative Signal S1, und an der Abszisse ein Maß für das Eintauchen der Kante K des Werkzeugs WZG in den Mess-Strahl MS (Eintauchtiefe ET) aufgetragen ist. Bei dem hier gezeigten Verlauf des repräsentativen Signals S1 über der Eintauchtiefe ET handelt es sich um einen gebündelten Mess-Strahl MS mit kreisrundem Querschnitt.

Die Steuer- und Auswerteeinrichtung ECU der Vorrichtung ist zum Empfangen und Verarbeiten des repräsentativen Signals S1 eingerichtet. Die Auswerteeinrichtung ECU verarbeitet dieses repräsentative Signal S1 und gibt ein Ausgangssignal AS aus. Dieses Ausgangssignal AS umfasst in einer Variante nur einen Schaltpunkt; in einer weiteren Variante umfasst dieses Ausgangssignal AS auch noch einen Korrekturwert. Des Weiteren kann das Ausgangssignal AS auch Anweisungen zum Bewegen und oder Rotieren des Werkzeugs umfassen. Sowohl die Details des Schaltpunkts als auch die Details des Korrekturwerts sowie zu den Anweisungen zum Bewegen und oder Rotieren des Werkzeugs sind nachstehend im Einzelnen erläutert.

Wenn das Werkzeug WZG rotiert und vorher/gleichzeitig oder danach seine Schneiden/Kannten K in den Mess-Strahl MS hinein- oder herausbewegt werden, hat dies zur Folge, dass wenigstens eine Schneide oder Kante K des Werkzeugs WZG in den Mess-Strahl MS eintaucht und diesen wieder verlässt. Auf diese Weise wird die bei dem Laserstrahlempfänger LE ankommende Lichtmenge aus dem Messstrahl MS moduliert.

Damit liefert die Steuer- und Auswerteeinrichtung ECU der Vorrichtung nach dem Verarbeiten des repräsentativen Signals S1 ein Ausgangssignal AS, an eine numerische Steuerung NC der Werkzeugmaschine.

Mit dieser Konfiguration ist ein Verfahren zum Kontrollieren oder Vermessen des in der numerisch gesteuerten Werkzeugmaschine einzusetzenden Werkzeugs auszuführen.

Fig.1 veranschaulicht das Positionieren des WZG in der Startposition. Dazu wird in der numerischen Steuerung NC der Werkzeugmaschine ein Positionier-Satz oder Mess-Satz gestartet, der ein Rotieren des Werkzeugs WZG und ein Bewegen des rotierenden Werkzeugs WZG relativ zu dem Mess-Strahl MS bewirkt soweit, bis das Werkzeug eine Startposition erreicht, in der die oder jede Schneide des Werkzeugs in den Mess-Strahl soweit eintaucht und diesen dabei soweit abschattet, dass eine untere und eine obere Schaltschwelle eines Mess-Bereichs der Auswerteeinrichtung erreicht oder unterschritten ist.

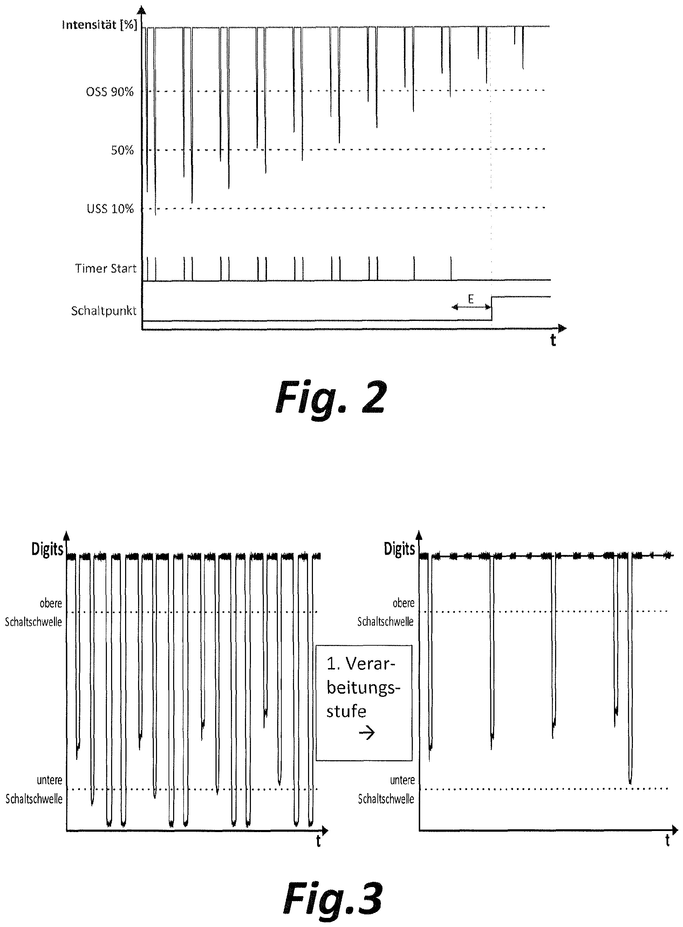

Die Fig. 2 erläutert die Schaltpunktausgabe anhand eines Signalverlaufs der Abschattung des Mess-Strahls durch die Schneiden eines rotierenden Werkzeugs WZG. Im oberen Teil der Abbildung ist der Signalverlauf zu sehen. Die Bewegung der Schneiden K durch den Mess-Strahl MS ist an den Digit Werten ersichtlich.

In Fig. 2 ist veranschaulicht, wie die Bewegung der Schneiden K durch den Mess-Strahl am Digit-Wert (Ordinate) erkennbar ist. Hierbei liegt die (obere) Schaltschwelle OSS nicht, wie im Stand der Technik üblich, bei 50%, sondern bei einem höheren Schwellenwert (zum Beispiel 90% Lichtintensität am Lichtstrahlempfänger). Jeweils zum Zeitpunkt maximaler Abschattung des Mess-Strahls MS durch eine Schneide K, die noch unterhalb der oberen Schaltschwelle OSS stattfindet, wird in der Auswerteeinrichtung ECU eine Uhr (Timer) mit einer Erwartungszeit *E* der nächsten maximalen Abschattung durch dieselbe Schneide gestartet, wobei *E* abhängig ist von der Drehzahl *n* des Werkzeugs pro Minute. Diese Uhr in der Auswerteeinrichtung ECU wird jedes Mal zurückgesetzt und erneut gestartet, wenn eine weitere Schneide K eine (maximale) Abschattung des Mess-Strahls MS hervorruft, die noch unterhalb der oberen Schaltschwelle OSS stattfindet. Wenn die Erwartungszeit E der Uhr abläuft, ohne dass die Auswerteeinrichtung ECU eine Abschattung des Mess-Strahls MS erfasst, wird ein Schaltpunkt an die numerische Steuerung NC ausgegeben. Die Zeitspanne zwischen dem letzten Unterschreiten der (oberen) Schaltschwelle und der Ausgabe des Schaltpunkts entspricht der Erwartungszeit E.

Diese Bewegung des rotierenden Werkzeugs wird mit einem Mess-Satz in der numerischen Steuerung NC der Werkzeugmaschine ausgeführt. Der Mess-Satz in der numerischen Steuerung NC der Werkzeugmaschine bewirkt ein Bewegen des mit der vorbestimmten Drehzahl *n* rotierenden Werkzeugs WZG mit einer zumindest annähernd konstanten Vorschubgeschwindigkeit *v*, ausgehend von der Startposition aus dem Mess-Strahl MS heraus. Außerdem erfolgt ein Signalisieren der Drehzahl *n* des rotierenden Werkzeugs und der konstanten Vorschubgeschwindigkeit *v* von der Maschinensteuerung der Werkzeugmaschine an die Mess-Vorrichtung MV.

Während des Bewegens des rotierenden Werkzeugs WZG erfolgt das Erfassen des durch die oder jede Schneide K des Werkzeugs WZG beim Abschatten des Mess-Strahls MS erzeugten Abschattungssignals in Bezug auf sein örtliches und zeitliches Auftreten während des Herausbewegens des rotierenden Werkzeugs WZG aus dem Mess-Strahl MS heraus.

In der Auswerteeinrichtung ECU erfolgt ein Ermitteln des Ereignisses, dass zumindest für eine Schneide K des Werkzeugs WZG das Abschattungssignal die untere Schaltschwelle USS des Mess-Bereichs nicht unterschreitet und die obere Schaltschwelle OSS des Mess-Bereichs nicht überschreitet, so dass ein während des Bewegens des rotierenden Werkzeugs WZG aus dem Mess-Strahl MS heraus erzeugtes maximales Abschattungssignal sich oberhalb der unteren Schaltschwelle USS und unterhalb der oberen Schaltschwelle OSS des Mess-Bereichs befindet.

Eine zeitliche und örtliche Aufzeichnung mit Auswertung der Abschattungssignale durch die Mess-Vorrichtung beginnt, wenn eine kürzeste Schneide des Werkzeugs WZG eine untere Schaltschwelle USS im analogen Mess-Bereich nicht mehr unterschreitet. Dieses Ereignis definiert einen Zeitpunkt *t0 = 0µs,* an dem sich die ersten relevanten Informationen für den Beginn einer Auswertung befinden.

Zur Verbesserung der Signalqualität und der ausgegebenen Daten / der Genauigkeit des ausgegebenen Schaltpunkts werden in einer ersten Verarbeitungsstufe im Abschattungssignal solche Informationen eliminiert, die ihren Tiefpunkt nicht zwischen der oberen und der unteren Schaltschwelle des Mess-Bereichs haben.

Dabei zeigt Fig. 3, wie in der Auswerteeinrichtung ECU eine Eliminierung von Signalteilen erfolgt, die keine auswertbare Information enthalten. Ist der Tiefpunkt des Abschattungssignals nicht innerhalb des Bereichs zwischen der oberen Schaltschwelle OSS und unteren Schaltschwelle USS (Fig. 3 links), wird das Abschattungssignal der jeweiligen Schneide K eliminiert (Fig. 3 rechts), um nur die relevanten Informationen auszuwerten. Die tatsächliche Länge einer Schneide kann nur ermittelt werden, wenn der Tiefpunkt, also die Spitze der Schneide, sich zwischen der oberen Schaltschwelle OSS und unteren Schaltschwelle USS des Mess-Strahls befindet.

Dabei wird die Vorschubgeschwindigkeit im Verhältnis zum von einer Strahl-Querabmessung des Mess-Strahls abhängigen Mess-Bereich von der Auswerteeinrichtung so bestimmt, dass wenigstens eine der Schneiden K während einer für eine Auswertung ausreichenden Anzahl von Umdrehungen des rotierenden Werkzeugs WZG an unterschiedlichen Positionen ein jeweiliges, oberhalb der unteren und unterhalb der oberen Schaltschwelle des Mess-Bereichs befindliches maximales Abschattungssignal hervorruft. Dies ist zum Beispiel in Fig. 3 für die im linken Diagramm erste Schneide des Werkzeugs WZG mit vier Schneiden erkennbar, welche auch das 5., 9., und 13. Abschattungssignal, jeweils um einen konstanten Wert nach oben versetzt, hervorruft. Dieser Versatz ergibt sich daraus, dass bei jeder Umdrehung des rotierenden Werkzeugs die ermittelten maximalen Abschattungssignale jeder Schneide K sich entsprechend der zeitlichen Verschiebung und örtlichen Veränderung des Werkzeugs um einen zumindest annähernd konstanten Versatzbetrag unterscheiden.

Genauer gesagt bestimmt die Auswerteeinrichtung ECU den Versatzbetrag aus einer Positionsänderung *deltaS* der jeweiligen Schneide K des Werkzeugs WZG im analogen Mess-Bereich bei einer vollständigen Umdrehung des Werkzeugs WZG als *deltaS = v * T,* wobei die Zeitkonstante *T* = 1 / Drehzahl pro Minute *[min⁻¹]* des Werkzeugs, und *v [mm*/*min]* die konstante Vorschubgeschwindigkeit des Werkzeugs ist.

Dabei ist die Vorschubgeschwindigkeit *v [mm*/*min]* des Werkzeugs WZG im Verhältnis zum verfügbaren analogen Mess-Bereich so gewählt, dass jede Schneide K des Werkzeugs WZG über mindestens eine oder mehrere Umdrehungen an versetzten Positionen im analogen Mess-Bereich den Mess-Strahl MS abschattet. So unterscheiden sich pro Umdrehung des Werkzeugs WZG ermittelte maximale Abschattungssignale dieser Schneide K entsprechend der zeitlichen Verschiebung und örtlichen Veränderung des Werkzeugs WZG um die Positionsänderung *deltaS.*

Wenn alle Schneiden K des Werkzeugs WZG über mindestens eine oder mehrere Umdrehungen den analogen Mess-Bereich zwischen der unteren Schaltschwelle USS und der oberen Schaltschwelle OSS des Mess-Strahls MS durchlaufen, ist der relative Abstand jeder Schneide zur nachfolgenden Schneide jeweils durch den konstanten Versatzbetrag der Positionsänderung *deltaS(K) = v * T* / *K* bestimmt, wobei *K >=1 [ohne Einheit]* die Anzahl der Schneiden des Werkzeugs WZG ist, die als symmetrisch verteilt / angeordnet angenommen werden.

Allgemein gilt: Die Auswerteeinrichtung ECU bestimmt den relativen Versatzbetrag des Abschattungssignals einer / jeder Schneide im Vergleich zum Abschattungssignal der ersten (kürzesten) Schneide zu einem beliebigen Zeitpunkt *tk > t0 [µs, min]* seit Beginn der Aufzeichnung und Auswertung der Abschattungssignale zum Zeitpunkt *t0 =0 [µs, min]* aus einer Positionsänderung *deltaS(t) [µm] = v * (tk* - *t0) = v * t,* mit *t = (tk* - *t0) = N * T [µs, min],* wobei *N = (tk - t0)1 T >=0 [ohne Einheit]* die Anzahl der teilweise und/oder vollständig ausgeführten Umdrehungen seit dem Zeitpunkt *t0* beschreibt, und die Zeitkonstante *T* = 1 / Drehzahl pro Minute *[min⁻¹]* des Werkzeugs ist. In diesem allgemein beschriebenen Zusammenhang ist die Kenntnis über die genaue Anzahl der Schneiden K nicht erforderlich, sondern nur die verstrichene Zeitdauer *t = (tk* - *t0)* seit dem Zeitpunkt *t0,* sowie die Zeitkonstante *T [µs, min]* für eine Umdrehung des Werkzeugs WZG und die konstante Vorschubgeschwindigkeit *v [mm*/*min]* des Werkzeugs.

Die Zeit *t = (tk - t0)* kann entweder durch die Anzahl der teilweise und/oder vollständig ausgeführten Umdrehungen seit dem Zeitpunkt *t0* beschrieben werden, oder als ein Vielfaches der Samplezeit *ts [µs] = 1* /*fs,* wobei *fs [µs⁻¹]* die Abtastfrequenz zum Einlesen der Messwerte *Xi* ist. Der Messwert *X0* zum Zeitpunkt *t0* wird in einem Messwertspeicher mit Index *i = 0* gespeichert. Bei jedem neu eingelesenen Messwert *Xi* wird der Index i jeweils um einen Zähler *i = i + 1* inkrementiert und der Messwert unter dem neuen Index i im Messwertspeicher gespeichert. Alternativ bestimmt die Auswerteeinrichtung ECU die Zeit *t* aus dem Zusammenhang *t [µs] = i* / *fs,* wobei *i* der aktuelle Messwert-Index zu einem Messwert *Xi* ist und *fs [µs⁻¹]* die SampleRate (Abtastfrequenz) zum Einlesen der Messwerte *Xi* ist.

Die Auswerteeinrichtung ECU beendet die zeitliche und örtliche Aufzeichnung der Abschattungssignale mit der Ausgabe des Schaltsignals an die Maschinensteuerung NC. Dabei erfolgt das Erzeugen des Schaltpunkts aus den resultierenden repräsentativen Abschattungssignalen, und das Ausgeben des Schaltpunkts an die Maschinensteuerung NC der Werkzeugmaschine, wenn die letzte Schneide K die obere Schaltschwelle OSS des Mess-Bereichs überschritten hat. Dabei wird auch der Zeitpunkt der Ausgabe des Schaltpunkts in der Maschinensteuerung NC der Werkzeugmaschine oder in der Auswerteeinrichtung ECU der Mess-Vorrichtung MV gespeichert.

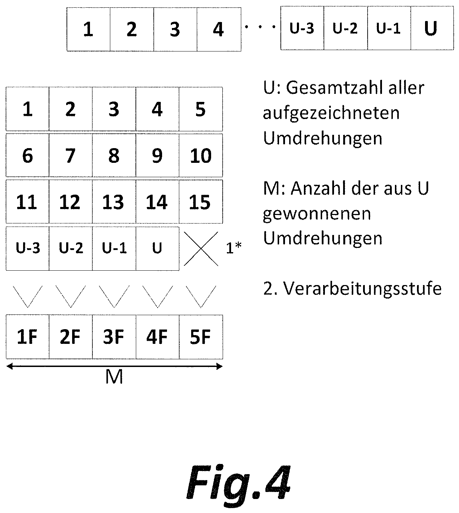

Wie in Fig. 4 veranschaulicht, wird in einer weiteren Verarbeitungsstufe in der Auswerteeinrichtung ECU ein Ausgangs-Signal(-zug), enthaltend Abschattungssignale aus M Umdrehungen des Werkzeugs, aus einem Eingangs-Signal(-zug) gebildet, enthaltend Abschattungssignale aus U Umdrehungen. Dabei gilt U >= M. Dazu werden für jeden Wert im Ausgangs-Signal(-zug) mehrere zeitlich korrespondierende Werte des Eingangs-Signal(-zug)s zu einem Wert zusammengefasst. So wird ein Ausgangs-Signal der Länge *M* Umdrehungen des Werkzeugs aus einem Eingangs-Signal der Länge *U* Umdrehungen gebildet. Für jeden Wert im Ausgangs-Signal dieser zweiten Verarbeitungsstufe stehen ein oder mehrere Werte, zum Beispiel drei oder vier Werte, zur Verfügung. Diese Werte werden in der zweiten Verarbeitungsstufe zu einem Wert zusammengefasst. Daten mit relevanten Informationen werden ggf. linearisiert und von Digit-Werten in µm-Werte umgerechnet.

Die Auswerteeinrichtung ECU führt die Umrechnung von Digit-Werten in µm-Werte mit Hilfe eines Umrechnungspolynoms wie folgt aus: *S(x) [µm] = f(x[Digits]),* wobei *S(x)* die Eintauchtiefe der Werkzeugschneide in den Mess-Strahl zu einem bestimmten Digit-Wert ist und die Funktion *f* das Polynom für die Umrechnung beschreibt. Unter Berücksichtigung des zeitabhängigen relativen Versatzbetrages *deltaS(t) [µm]* ergibt sich die entsprechende Eintauchtiefe der Werkzeugschneide *S [µm]* zu einem bestimmten Zeitpunkt *t* aus der Summe *S [µm]* = *S(x) [µm] + deltaS(t) [µm].*

Die zweite Verarbeitungsstufe fasst gemäß Fig. 4 zum Beispiel Informationen aus den Umdrehungen U=1, 6, 11 und U-3 zu einer resultierenden Umdrehung 1F zusammen. Ist für einen Index keine oder nur eine gültige, nicht verarbeitete Information vorhanden, wird der Wert in 1F entsprechend gesetzt. Sind mehrere gültige Informationen vorhanden, werden diese mit geeigneten mathematischen Methoden zusammengefasst. Als geeignete Methode kann zum Beispiel eine Mittelwert-Bildung oder Median-Bildung eingesetzt werden, aber auch eigen definierte Auswerte-Algorithmen sind möglich. Mit der zweiten Verarbeitungsstufe werden diese einzelnen Umdrehungen U des Werkzeugs WZG und die dabei auftretenden Abschattungssignale durch die Schneiden K zu einer Signalfolge zusammengefasst, die eine einzige Umdrehung (1F, 2F, 3F, ...) des Werkzeugs WZG synthetisiert. Da die einzelnen Umdrehungen U zu einem unterschiedlichen Zeitpunkt aufgenommen werden, muss der zeitliche Versatz im Zusammenhang mit der angegebenen Vorschubgeschwindigkeit bei der Umrechnung in µm mitberücksichtigt werden.

Eine dritte Verarbeitungsstufe bewirkt, wie in Fig. 5 veranschaulicht, dass im Ausgangs-Signal singuläre Störungen aus der Abfolge der Abschattungssignale jeder Schneide eliminiert werden. Dabei werden die Abschattungssignale auf wiederkehrende Ereignisse untersucht um die Periodizität der Abschattungssignale zu erkennen. Basierend auf der Periodizität der Abschattungssignale werden einer Umdrehung des Werkzeugs WZG entsprechende Abfolgen der Abschattungssignale als Signalblöcke zusammengefasst und mit den Abfolgen der Abschattungssignale einer oder mehrerer folgender Umdrehungen (1F, 2F, 3F, ...) des Werkzeugs WZG korreliert. Anschließend werden zu jedem Abtastzeitpunkt die einzelnen Signalwerte in den Abfolgen der Abschattungssignale miteinander verglichen, jeweils das Minimum ausgewählt, wobei die mathematische Methode zur Bestimmung des repräsentativen Wertes zu diesem Abtastzeitpunkt auch durch Maximum, Mittelwert, Median oder ähnlichen Methoden realisiert sein kann, und dieses als Ausgangs-Wert (1B) der dritten Verarbeitungsstufe ausgegeben.

Wie in Fig. 5 erkennbar, bewirkt die dritte Verarbeitungsstufe das Eliminieren von einzelnen, sporadischen Ereignissen während der Aufzeichnung der Abschattungssignale. Im Beispiel ist zu Beginn im Signal ein sich nicht wiederholendes Ereignis A dargestellt. Dieses wird durch die dritte Verarbeitungsstufe herausgefiltert und für die nachfolgenden Auswertungen nicht weiter berücksichtigt.

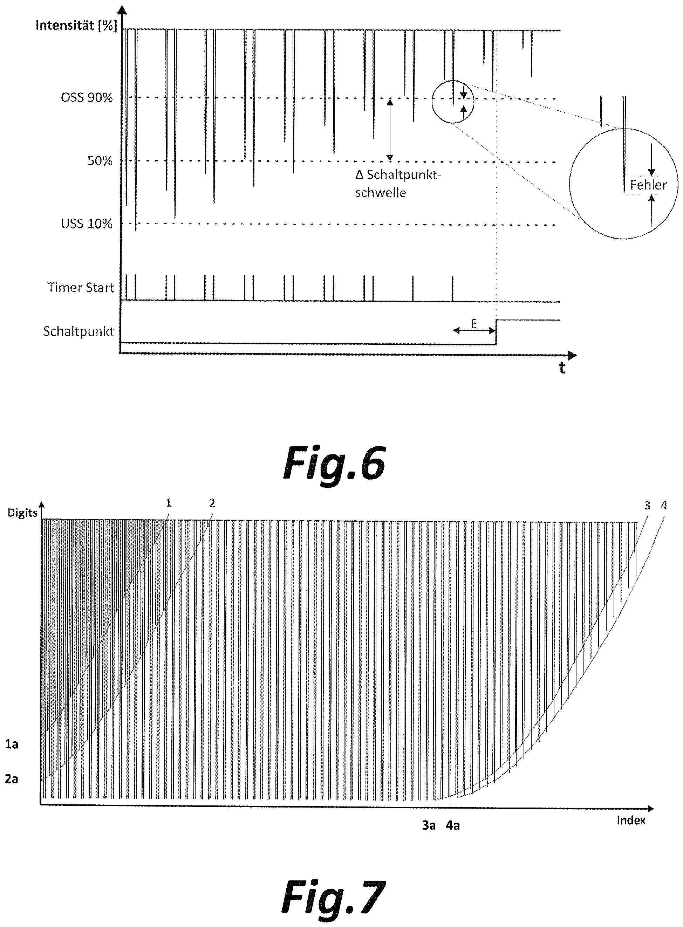

Fig. 6 erläutert, wie ein zeitlicher Fehler bei der Ausgabe des Schaltpunkts kompensiert wird. Hierzu dienen die Schritte Berechnen der Länge jeder Schneide, einschließlich der Länge der Schneide, für die der Schaltpunkt zur Maschinensteuerung ausgegeben wird, Vergleichen einer für den Zeitpunkt der Schaltpunktausgabe berechneten Länge mit der aus der Abschattung ermittelten Länge der Schneide für die dieser Schaltpunkt ausgegeben wurde, und Signalisieren der Differenz an die Maschinensteuerung als Korrekturwert. Mit Hilfe dieser Berechnung werden außerdem die in der Mess-Vorrichtung bekannten Abweichungen durch die um die Erwartungszeit E verzögerte Ausgabe des Schaltpunkts und den Versatz zwischen kalibrierter Schaltpunktschwelle, zum Beispiel bei 50% Lichtintensität am Lichtstrahlempfänger, und der bei diesem Verfahren verwendeten oberen Schaltpunktschwelle, zum Beispiel bei 90% Lichtintensität am Lichtstrahlempfänger, korrigiert.

Fig. 7 veranschaulicht eine komplette, für eine Messbereichserweiterung vorliegende Aufnahme. Im Signal sind die Verläufe der einzelnen Schneiden eingezeichnet, die im analogen Mess-Bereich für eine bestimmte Zeit-Dauer während der Messung kurzzeitig sichtbar sind. Durch die Bewegung des Werkzeugs WZG während der Messung befindet sich die Kante K einer Schneide immer an einer unterschiedlichen Position. Die Kante K einer / jeder Schneide taucht bei Punkt 1a ... 4a erstmalig in den begrenzten analogen Mess-Bereich ein, durchläuft diesen Mess-Bereich aufgrund der konstanten Messgeschwindigkeit während mehrerer Umdrehungen und verlässt den analogen Mess-Bereich bei Punkt 1 ... 4 wieder. Bei unterschiedlichen Längen der Schneiden sind deren Kanten nicht alle gleichzeitig im analogen Mess-Bereich sichtbar. Der Verlauf der rot eingezeichneten Linien ist bei Digits keine Gerade, wie es aufgrund der konstanten Vorschubgeschwindigkeit sein sollte, da die Werte zuerst mit Hilfe von Linearisierungskennlinien umgerechnet werden.

Insgesamt werden dann die Abschattungssignale jeder Schneide K zu einem resultierenden repräsentativen Abschattungssignal für diese / jede Schneide in der oben beschriebenen Weise überlagert.

Die Mess-Vorrichtung MV und die Maschinensteuerung NC der Werkzeugmaschine tauschen drahtlos oder über eine Datenleitung notwendige Informationen und Signale aus. Dabei signalisiert die Maschinensteuerung der Werkzeugmaschine für die Messung relevante Parameter, wie Drehzahl und Vorschubgeschwindigkeit des Werkzeugs an die Mess-Vorrichtung. Die Mess-Vorrichtung signalisiert von ihr ermittelte Ergebnisse an die Maschinensteuerung der Werkzeugmaschine.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

## Patentansprüche

1. Verfahren zum Kontrollieren eines in einer numerisch gesteuerten Werkzeugmaschine einzusetzenden Werkzeugs (WZG), mit folgenden Schritten:
a) Bereitstellen einer Mess-Vorrichtung (MV), aufweisend
- einen Lichtstrahler (LS), eingerichtet zum Abgeben eines Mess-Strahls (MS) für ein berührungsloses Abtasten des Werkzeugs (WZG) mittels des Mess-Strahls (MS), und
- einen Lichtstrahlempfänger (LE), eingerichtet zum Empfangen des Mess-Strahls (MS) und zum Ausgeben eines für ein Maß einer Abschattung des Mess-Strahls (MS) durch das Werkzeug (WZG) repräsentativen Abschattungssignals (S1);
b) Bereitstellen einer Auswerteeinrichtung (ECU), eingerichtet zum Empfangen und Verarbeiten des Abschattungssignals (S1) aus dem Lichtstrahlempfänger (LE);
c) Rotieren des Werkzeugs (WZG);
d) Bewegen des rotierenden Werkzeugs (WZG) relativ zu dem Mess-Strahl (MS) soweit, bis das Werkzeug (WZG) eine Startposition erreicht, in der die oder jede Schneide (K) des Werkzeugs (WZG) in den Mess-Strahl (MS) soweit eintaucht und diesen dabei soweit abschattet, dass eine untere und eine obere Schaltschwelle (USS, OSS) eines Mess-Bereichs der Auswerteeinrichtung (ECU) erreicht sind;
e) Bewegen des mit einer vorbestimmten Drehzahl (n) rotierenden Werkzeugs (WZG) mit einer zumindest annähernd konstanten Vorschubgeschwindigkeit (v), ausgehend von dieser Startposition aus dem Mess-Strahl (MS) heraus, oder von einer Startposition oberhalb der oberen Schaltschwelle (OSS) in den Mess-Strahl (MS) hinein, bis die kürzeste Schneide die untere Schaltschwelle (USS) unterschreitet, und
f) Erfassen des durch die oder jede Schneide (K) des Werkzeugs (WZG) beim Abschatten des Mess-Strahls (MS) erzeugten Abschattungssignals (S1) in Bezug auf sein örtliches und zeitliches Auftreten während des Herausbewegens des rotierenden Werkzeugs (WZG) aus dem Mess-Strahl (MS) heraus; wobei das Verfahren **gekennzeichnet ist durch**:
g) Ermitteln des Ereignisses, dass zumindest für eine Schneide (K) des Werkzeugs (WZG) das Abschattungssignal (S1) die untere Schaltschwelle (USS) des Mess-Bereichs nicht unterschreitet und die obere Schaltschwelle (OSS) des Mess-Bereichs nicht überschreitet, so dass ein während des Bewegens des rotierenden Werkzeugs (WZG) aus dem Mess-Strahl (MS) heraus erzeugtes maximales Abschattungssignal (S1) sich oberhalb der unteren und unterhalb der oberen Schaltschwelle (USS, OSS) des Mess-Bereichs befindet; wobei
- die Vorschubgeschwindigkeit (v) im Verhältnis zum von einer Strahl-Querabmessung des Mess-Strahls (MS) abhängigen Mess-Bereich der Auswerteeinrichtung (ECU) so bestimmt wird, dass wenigstens eine der Schneiden (K) während einer für eine Auswertung ausreichenden Anzahl von Umdrehungen des rotierenden Werkzeugs (WZG) an unterschiedlichen Positionen ein jeweiliges, oberhalb der unteren und unterhalb der oberen Schaltschwelle (USS, OSS) des Mess-Bereichs befindliches maximales Abschattungssignal (S1) hervorruft;
- bei jeder Umdrehung des rotierenden Werkzeugs (WZG) die ermittelten maximalen Abschattungssignale (S1) jeder Schneide (K)
-- sich entsprechend der zeitlichen Verschiebung und örtlichen Veränderung des Werkzeugs (WZG) um einen zumindest annähernd konstanten Versatzbetrag unterscheiden, und
-- zu einem resultierenden repräsentativen Abschattungssignal für diese Schneide (K) überlagert werden.

2. Verfahren nach Anspruch 1, mit den Schritten:
- Erzeugen eines Schaltpunkts (AS) aus den resultierenden repräsentativen Abschattungssignalen, und
- Ausgeben des Schaltpunkts (AS) von der Mess-Vorrichtung (MV) an die Maschinensteuerung (NC) der Werkzeugmaschine.

3. Verfahren nach Anspruch 1 oder 2, mit den Schritten:
- Signalisieren der Drehzahl (n) des rotierenden Werkzeugs (WZG) und der konstanten Vorschubgeschwindigkeit (v) von der Maschinensteuerung (ECU) der Werkzeugmaschine an die Mess-Vorrichtung (MV).

4. Verfahren nach einem der Ansprüche 1 bis 3, mit den Schritten:
- Bestimmen einer Positionsänderung *deltaS* der Schneide (K) des Werkzeugs (WZG) im analogen Mess-Bereich bei einer vollständigen Umdrehung des Werkzeugs (WZG) als *deltaS = v * T,* wobei *T = 1* / *Drehzahl [min⁻¹]* des Werkzeugs (WZG), und *v* [mm/min] die konstante Vorschubgeschwindigkeit (v) des Werkzeugs (WZG) ist.

5. Verfahren nach einem der Ansprüche 1 bis 4, wobei eine zeitliche und örtliche Aufzeichnung mit Auswertung der Abschattungssignale (S1) durch die Mess-Vorrichtung (MV) beginnt, wenn eine kürzeste Schneide (K) des Werkzeugs (WZG) eine untere Schaltschwelle (USS) im analogen Mess-Bereich nicht mehr unterschreitet.

6. Verfahren nach einem der Ansprüche 1 bis 5, wobei die Vorschubgeschwindigkeit *v [mm*/*min]* des Werkzeugs (WZG) im Verhältnis zum verfügbaren analogen Mess-Bereich so gewählt ist, dass jede Schneide (K) des Werkzeugs (WZG) über mindestens eine Umdrehung oder mehrere Umdrehungen an versetzten Positionen im analogen Mess-Bereich den Mess-Strahl (MS) abschattet, so dass sich die pro Umdrehung ermittelten maximalen Abschattungssignale (S1) dieser Schneide (K) entsprechend der zeitlichen Verschiebung und örtlichen Veränderung des Werkzeugs (WZG) um eine Positionsänderung *deltaS = v * T* unterscheiden, wobei *T = 1* / *Drehzahl [min⁻¹]* des Werkzeugs (WZG), und *v [mm*/*min]* die Vorschubgeschwindigkeit (v) des Werkzeugs (WZG) ist, und wobei die Abschattungssignale (S1) jeder Schneide (K) zu einem resultierenden repräsentativen Abschattungssignal für diese / jede Schneide (K) überlagert werden.

7. Verfahren nach einem der Ansprüche 1 bis 6, wobei alle Schneiden (K) des Werkzeugs (WZG) über mindestens eine Umdrehung oder mehrere Umdrehungen den analogen Mess-Bereich zwischen der unteren und der oberen Schaltschwelle (USS, OSS) des Mess-Strahls (MS) durchlaufen, wobei der relative Abstand von jeder Schneide (K) zu ihrer nachfolgenden Schneide (K) durch den konstanten Versatzbetrag der Positionsänderung *deltaS(K) = v * T* / *K* bestimmt wird, wobei *K [ohne Einheit]* die Anzahl der vorzugsweise symmetrisch am Umfang verteilt angeordneten Schneiden (K) des Werkzeugs ist, *T = 1* / *Drehzahl [min⁻¹]* des Werkzeugs, und *v [mm*/*min]* die Vorschubgeschwindigkeit (v) des Werkzeugs (WZG) ist.

8. Verfahren nach einem der Ansprüche 1 bis 6, wobei alle Schneiden (K) des Werkzeugs (WZG) während einer Umdrehung oder mehreren Umdrehungen den analogen Mess-Bereich zwischen der unteren und der oberen Schaltschwelle (USS, OSS) des Mess-Strahls (MS) durchlaufen, wobei der relative Abstand von einer / jeder Schneide (K) zu der ersten (kürzesten) Schneide (K) zu einem beliebigen Zeitpunkt *tk > t0 [µs, min]* durch den relativen Versatzbetrag der Positionsänderung *deltaS(t) = v * (tk - t0) = v * t = v * N * T [µm]* bestimmt wird, wobei *t0 = 0 [µs, min]den* Zeitpunkt des Beginns der Aufzeichnung mit Auswertung kennzeichnet, *tk [µs, min]* der zu betrachtende Zeitpunkt mit einem maximalen Abschattungssignal (S1) einer Schneide (K) ist, *t [µs, min]* die verstrichene Zeitdauer seit dem Zeitpunkt *t0* ist, *N [ohne Einheit]* die Anzahl der vollständigen und/oder Bruchteilen von Umdrehungen seit Beginn der Aufzeichnung mit Auswertung zum Zeitpunkt *t0 = 0 [µs, min]* ist*, T = 1* / *Drehzahl [min⁻¹]* des Werkzeugs, und *v [mm*/*min]* die Vorschubgeschwindigkeit (v) des Werkzeugs (WZG) ist.

9. Verfahren nach einem der Ansprüche 1 bis 8, wobei die zeitliche und örtliche Aufzeichnung der Abschattungssignale (S1) mit der Ausgabe eines Schaltpunkts (AS) an die Maschinensteuerung (ECU) beendet wird, und wobei das Erzeugen des Schaltpunkts (AS) aus den resultierenden repräsentativen Abschattungssignalen, und/oder das Ausgeben des Schaltpunkts (AS) an die Maschinensteuerung (ECU) der Werkzeugmaschine erfolgt, wenn die letzte Schneide (K) die obere Schaltschwelle (OSS) des Mess-Bereichs überschritten hat, und/oder der Zeitpunkt der Ausgabe des Schaltpunkts (AS) in der Maschinensteuerung (ECU) der Werkzeugmaschine oder in der Mess-Vorrichtung (MV) gespeichert wird.

10. Verfahren nach einem der Ansprüche 1 bis 9, wobei zum Zeitpunkt maximaler Abschattung des Mess-Strahls (MS) durch eine Schneide (K) eine Uhr mit einer Erwartungszeit *E [µs]* der nächsten maximalen Abschattung durch dieselbe Schneide (K) gestartet wird, wobei Eabhängig ist von der Drehzahl (n) des Werkzeugs (WZG) pro Minute, und/oder diese Uhr solange zurückgesetzt und erneut gestartet wird, wie eine weitere Schneide (K) eine Abschattung des Mess-Strahls (MS) hervorruft, und wenn die Uhr abläuft, ohne dass eine Abschattung des Mess-Strahls (MS) erfasst wird, der Schaltpunkt (AS) ausgegeben wird.

11. Verfahren nach einem der Ansprüche 1 bis 10, wobei im Abschattungssignal (S1) solche Informationen eliminiert werden, die ihren Tiefpunkt nicht zwischen der oberen und der unteren Schaltschwelle (OSS, USS) des Mess-Bereichs haben.

12. Verfahren nach einem der Ansprüche 1 bis 11, wobei ein Ausgangs-Signal, das Abschattungssignale (S1) aus *M* Umdrehungen des Werkzeugs (WZG) umfasst, aus einem Eingangs-Signal gebildet wird, das Abschattungssignale (S1) aus *U* Umdrehungen umfasst, wobei gilt *U>= M,* und/ oder wobei insbesondere für jeden Wert im Ausgangs-Signal ein oder mehrere Werte aus dem Eingangs-Signal zu einem Wert zusammengefasst werden.

13. Verfahren nach einem der Ansprüche 1 bis 12, wobei im Ausgangs-Signal singuläre Störungen aus der Abfolge der Abschattungssignale (S1) jeder Schneide (K) eliminiert werden, wobei
- die Abschattungssignale (S1) auf wiederkehrende Ereignisse untersucht werden, um deren Periodizität zu erkennen,
- einer Umdrehung des Werkzeugs (WZG) entsprechende Abfolgen der Abschattungssignale (S1) als Signalblöcke zusammengefasst und mit den Abfolgen der Abschattungssignale (S1) einer oder mehrerer folgender Umdrehungen des Werkzeugs (WZG) korreliert werden,
- zu jedem Abtastzeitpunkt die einzelnen Signalwerte in den Abfolgen der Abschattungssignale (S1) miteinander verglichen werden, jeweils das Minimum ausgewählt und dieses als Ausgangs-Wert ausgegeben wird, wobei zur Bestimmung des resultierenden repräsentativen Wertes zu diesem Abtastzeitpunkt zusätzlich oder alternativ das Maximum, Mittelwert, Median, oder dergl. ausgewertet wird.

14. Verfahren nach einem der Ansprüche 1 bis 13, wobei ein zeitlicher Fehler bei der Ausgabe des Schaltpunkts (AS) kompensiert wird durch
- Berechnen der Länge jeder Schneide (K), einschließlich der Länge der Schneide (K), für die der Schaltpunkt (AS) zur Maschinensteuerung (ECU) ausgegeben wurde,
- Vergleichen einer für den Zeitpunkt der Schaltpunktausgabe berechneten Länge mit der aus der Abschattung ermittelten Länge der Schneide (K), für die dieser Schaltpunkt (AS) ausgegeben wurde, und
- Signalisieren der Differenz an die Maschinensteuerung (NC) als Korrekturwert.

15. Verfahren nach einem der Ansprüche 1 bis 14, wobei die Mess-Vorrichtung (MV) und die Maschinensteuerung (NC) der Werkzeugmaschine drahtlos oder über eine Datenleitung kommunizieren, um notwendige Informationen und Signale auszutauschen, wobei die Maschinensteuerung (NC) der Werkzeugmaschine für die Messung relevante Parameter, wie Drehzahl (n) und Vorschubgeschwindigkeit (v) des Werkzeugs (WZG) und ggf. auch die Anzahl der Schneiden (K) des Werkzeugs (WZG) an die Mess-Vorrichtung (MV) signalisiert, und/oder die Mess-Vorrichtung (MV) von ihr ermittelte Ergebnisse an die Maschinensteuerung (NC) der Werkzeugmaschine signalisiert.

16. Vorrichtung zum Kontrollieren eines in einer numerisch gesteuerten Werkzeugmaschine einzusetzenden Werkzeugs (WZG), mit
einer Mess-Vorrichtung (MV), aufweisend
- einen Lichtstrahler (LS), eingerichtet zum Abgeben eines Mess-Strahls (MS) für ein berührungsloses Abtasten des Werkzeugs (WZG) mittels des Mess-Strahls (MS), und
- einen Lichtstrahlempfänger (LE), eingerichtet zum Empfangen des Mess-Strahls (MS) und zum Ausgeben eines für ein Maß einer Abschattung des Mess-Strahls (MS) durch das Werkzeug (WZG) repräsentativen Abschattungssignals (S1);
einer Steuer- und Auswerteeinrichtung (ECU), programmiert und eingerichtet zum
- Empfangen und Verarbeiten des Abschattungssignals (S1) aus dem Lichtstrahlempfänger (LE);
- Empfangen und Verarbeiten eines Signals aus einer Steuerung (NC) der Werkzeugmaschine über das Rotieren des Werkzeugs (WZG) und Bewegen des rotierenden Werkzeugs (WZG) relativ zu dem Mess-Strahl (MS), wobei das Signal eine vorbestimmte Drehzahl (n) und eine zumindest annähernd konstante Vorschubgeschwindigkeit (v) für das Werkzeug (WZG) umfasst;
- Veranlassen einer Mitteilung, an die Steuerung (NC) der Werkzeugmaschine, dass das Werkzeug (WZG) eine Startposition erreicht, in der die oder jede Schneide (K) des Werkzeugs (WZG) in den Mess-Strahl (MS) soweit eintaucht und diesen dabei soweit abschattet, dass eine untere und eine obere Schaltschwelle (USS, OSS) eines Mess-Bereichs der Steuer- und Auswerteeinrichtung erreicht ist;
- Veranlassen eines Bewegens des mit der vorbestimmten Drehzahl (n) rotierenden Werkzeugs (WZG) mit der zumindest annähernd konstanten Vorschubgeschwindigkeit (v), ausgehend von dieser Startposition aus dem Mess-Strahl (MS) heraus, oder von einer Startposition oberhalb der oberen Schaltschwelle (OSS) in den Mess-Strahl (MS) hinein, bis die kürzeste Schneide (K) die untere Schaltschwelle (USS) unterschreitet, und
- Erfassen des durch die oder jede Schneide (K) des Werkzeugs (WZG) beim Abschatten des Mess-Strahls (MS) erzeugten Abschattungssignals (S1) in Bezug auf sein örtliches und zeitliches Auftreten während des Herausbewegens des rotierenden Werkzeugs (WZG) aus dem Mess-Strahl (MS) heraus; wobei die Vorrichtung **dadurch gekennzeichnet ist, dass** die Steuer- und Auswerteeinrichtung (ECU) des Weiteren programmiert und eingerichtet ist zum
- Ermitteln des Ereignisses, dass zumindest für eine Schneide (K) des Werkzeugs (WZG) das Abschattungssignal (S1) die untere Schaltschwelle (USS) des Mess-Bereichs (MB) nicht unterschreitet und die obere Schaltschwelle (OSS) des Mess-Bereichs nicht überschreitet, so dass ein während des Bewegens des rotierenden Werkzeugs (WZG) aus dem Mess-Strahl (MS) heraus erzeugtes maximales Abschattungssignal (S1) sich oberhalb der unteren und unterhalb der oberen Schaltschwelle (USS, OSS) des Mess-Bereichs befindet; wobei
- die Vorschubgeschwindigkeit (v) im Verhältnis zum von einer Strahl-Querabmessung des Mess-Strahls (MS) abhängigen Mess-Bereich der Steuer- und Auswerteeinrichtung (ECU) so bestimmt ist, dass wenigstens eine der Schneiden (K) während einer für eine Auswertung ausreichenden Anzahl von Umdrehungen des rotierenden Werkzeugs (WZG) an unterschiedlichen Positionen ein jeweiliges, oberhalb der unteren und unterhalb der oberen Schaltschwelle (USS, OSS) des Mess-Bereichs befindliches maximales Abschattungssignal (S1) hervorruft;
- bei jeder Umdrehung des rotierenden Werkzeugs (WZG) die ermittelten maximalen Abschattungssignale (S1) jeder Schneide (K)
-- sich entsprechend der zeitlichen Verschiebung und örtlichen Veränderung des Werkzeugs (WZG) um einen zumindest annähernd konstanten Versatzbetrag unterscheiden, und
-- zu einem resultierenden repräsentativen Abschattungssignal für diese Schneide (K) überlagert werden.

17. Vorrichtung nach Anspruch 16, bei der die Steuer- und Auswerteeinrichtung (ECU) dazu programmiert und eingerichtet ist, einen oder mehrere der Verfahrensschritte der abhängigen Ansprüche 2 - 15 auszuführen.

## Claims

1. Method for checking a tool (WZG) to be used in a numerically controlled machine tool, comprising the following steps:
a) providing a measuring device (MV) comprising
- a light emitter (LS) arranged to emit a measuring beam (MS) for non-contact scanning of the tool (WZG) by means of the measuring beam (MS), and
- a light beam receiver (LE) set up for receive the measuring beam (MS) and to output a shadowing signal (S1) representative of a degree of shadowing of the measuring beam (MS) by the tool (WZG);
b) providing an evaluation device (ECU) adapted to receive and process the shading signal (S1) from the light beam receiver (LE);
c) rotating the tool (WZG);
d) moving the rotating tool (WZG) relative to the measuring beam (MS) until the tool (WZG) reaches a starting position in which the or each cutting edge (K) of the tool (WZG) dips into the measuring beam (MS) and shades the latter to such an extent that a lower and an upper switching threshold (USS, OSS) of a measuring range of the evaluation device (ECU) are reached;
e) moving the tool (WZG) rotating at a predetermined speed (n) at an at least approximately constant feed speed (v), starting from this starting position out of the measuring beam (MS), or from a starting position above the upper switching threshold (OSS) into the measuring beam (MS), until the shortest cutting edge falls below the lower switching threshold (USS), and
f) detecting the shadowing signal (S1) generated by the or each cutting edge (K) of the tool (WZG) when shadowing the measuring beam (MS) with respect to its local and temporal occurrence during the movement of the rotating tool (WZG) out of the measuring beam (MS); wherein the method is **characterized by**
g) determining the event that at least for one cutting edge (K) of the tool (WZG) the shadowing signal (S1) does not fall below the lower switching threshold (USS) of the measuring range and does not exceed the upper switching threshold (OSS) of the measuring range, so that a maximum shading signal (S1) generated during the movement of the rotating tool (WZG) out of the measuring beam (MS) is above the lower and below the upper switching threshold (USS, OSS) of the measuring range; wherein
- the feed speed (v) is determined in relation to the measuring range of the evaluation device (ECU), which depends on a beam transverse dimension of the measuring beam (MS), in such a way that at least one of the cutting edges (K) produces a respective maximum shading signal (S1) located above the lower and below the upper switching threshold (USS, OSS) of the measuring range at different positions during a number of revolutions of the rotating tool (WZG) sufficient for an evaluation;
- for each revolution of the rotating tool (WZG), the determined maximum shading signals (S1) of each cutting edge (K)
-- differ by an at least approximately constant offset amount according to the temporal displacement and local change of the tool (WZG), and
-- are superimposed to form a resulting representative shading signal for this cutting edge (K).

2. Method according to claim 1, comprising the steps of:
- generating a switching point (AS) from the resulting representative shading signals, and
- outputting the switching point (AS) from the measuring device (MV) to the machine control (NC) of the machine tool.

3. Method according to claim 1 or 2, comprising the steps of:
- signaling the rotational speed (n) of the rotating tool (WZG) and the constant feed speed (v) from the machine control unit (ECU) of the machine tool to the measuring device (MV).

4. Method according to any one of claims 1 to 3, comprising the steps of:
- Determining a change in position *deltaS* of the cutting edge (K) of the tool (WZG) in the analog measuring range during a complete rotation of the tool (WZG) as *deltaS = v * T*, where *T = 1* / *rotational speed [min⁻¹*] of the tool (WZG), and *v* [mm/min] is the constant feed speed (v) of the tool (WZG).

5. Method according to one of claims 1 to 4, wherein a temporal and local recording with evaluation of the shading signals (S1) by the measuring device (MV) begins when a shortest cutting edge (K) of the tool (WZG) no longer falls below a lower switching threshold (USS) in the analog measuring range.

6. Method according to one of claims 1 to 5, wherein the feed speed *v [mm*/*min]* of the tool (WZG) is selected in relation to the available analog measuring range such that each cutting edge (K) of the tool (WZG) shades the measuring beam (MS) over at least one revolution or several revolutions at offset positions in the analog measuring range, so that the maximum shadowing signals (S1) of this cutting edge (K) determined per revolution differ by a position change *deltaS = v * T* according to the temporal displacement and local change of the tool (WZG), where *T = 1* / *rotational speed [min⁻¹* ] of the tool (WZG), and *v [mm*/*min]* is the feed speed (v) of the tool (WZG), and where the shading signals (S1) of each cutting edge (K) are superimposed to form a resulting representative shading signal for this/each cutting edge (K).

7. Method according to one of claims 1 to 6, wherein all cutting edges (K) of the tool (WZG) pass through the analog measuring range between the lower and the upper switching threshold (USS, OSS) of the measuring beam (MS) over at least one revolution or several revolutions, wherein the relative distance from each cutting edge (K) to its following cutting edge (K) is determined by the constant offset amount of the position change *deltaS(K) = v * T* / *K,* where *K [without unit]* is the number of cutting edges (K) of the tool, preferably symmetrically distributed around the circumference, *T = 1* / *rotational speed [min⁻¹*] of the tool, and *v [mm*/*min]* is the feed speed (v) of the tool (WZG).

8. Method according to one of claims 1 to 6, wherein all cutting edges (K) of the tool (WZG) pass through the analog measuring range between the lower and the upper switching threshold (USS, OSS) of the measuring beam (MS) during one revolution or several revolutions, wherein the relative distance from one / each cutting edge (K) to the first (shortest) cutting edge (K) at any time *tk > t0 [µs, min]* is determined by the relative offset amount of the position change *deltaS(t) = v * (tk - t0) = v * t = v * N * T [µm],* where *t0 = 0 [µs, min]* characterizes the time of the start of the recording with evaluation, *tk [µs, min]* is the time to be considered with a maximum shadowing signal (S1) of a cutting edge (K), *t [µs, min] is* the elapsed time since time *t0, N [without unit]* is the number of complete and/or fractional revolutions since the start of recording with evaluation at time *t0 = 0 [µs, min], T = 1* / *rota-tional speed [min⁻¹* ] of the tool, and *v [mm*/*min]* is the feed speed (v) of the tool (WZG).

9. Method according to one of the claims 1 to 8, wherein the temporal and local recording of the shading signals (S1) is terminated with the output of a switching point (AS) to the machine control unit (ECU), and wherein the generation of the switching point (AS) from the resulting representative shading signals, and/or the output of the switching point (AS) to the machine control unit (ECU) of the machine tool takes place when the last cutting edge (K) has exceeded the upper switching threshold (OSS) of the measuring range, and/or the time of the output of the switching point (AS) is stored in the machine control unit (ECU) of the machine tool or in the measuring device (MV).

10. Method according to one of claims 1 to 9, wherein at the time of maximum shading of the measuring beam (MS) by a cutting edge (K) a clock is started with an expected time *E [µs]* of the next maximum shading by the same cutting edge (K), wherein *E* is dependent on the rotational speed (n) of the tool (WZG) per minute, and/or this clock is reset and restarted as long as a further cutting edge (K) causes a shading of the measuring beam (MS), and if the clock expires without a shading of the measuring beam (MS) being detected, the switching point (AS) is output.

11. Method according to one of claims 1 to 10, wherein in the shading signal (S1) such information is eliminated which does not have its low point between the upper and the lower switching threshold (OSS, USS) of the measuring range.

12. Method according to one of claims 1 to 11, wherein an output signal, which comprises shading signals (S1) from *M* revolutions of the tool (WZG), is formed from an input signal which comprises shading signals (S1) from *U* revolutions, wherein *U* >= *M,* and/or wherein in particular for each value in the output signal one or more values from the input signal are combined to form a value.

13. Method according to any one of claims 1 to 12, wherein in the output signal singular disturbances are eliminated from the sequence of shading signals (S1) of each edge (K), wherein
- the shading signals (S1) are examined for recurring events in order to detect their periodicity,
- sequences of the shading signals (S1) corresponding to one revolution of the tool (WZG) are combined as signal blocks and correlated with the sequences of the shading signals (S1) of one or more subsequent revolutions of the tool (WZG),
- the individual signal values in the sequences of the shading signals (S1) are compared with one another at each sampling time, the minimum is selected in each case and this is output as the output value, the maximum, mean value, median or the like being additionally or alternatively evaluated to determine the resulting representative value at this sampling time. is evaluated.

14. Method according to one of claims 1 to 13, wherein a temporal error in the output of the switching point (AS) is compensated for by
- calculating the length of each cutting edge (K), including the length of the cutting edge (K) for which the switching point (AS) was output to the machine control unit (ECU),
- comparing a length calculated for the time of the switching point output with the length of the cutting edge (K) determined from the shading for which this switching point (AS) was output, and
- signaling the difference to the machine control unit (NC) as a correction value.

15. Method according to one of claims 1 to 14, wherein the measuring device (MV) and the machine control (NC) of the machine tool communicate wirelessly or via a data line in order to exchange necessary information and signals, wherein the machine control (NC) of the machine tool signals parameters relevant for the measurement, such as rotational speed (n) and feed speed (v) of the tool (WZG) and possibly also the number of cutting edges (K) of the tool (WZG) to the measuring device (MV), and/or the measuring device (MV) signals results determined by it to the machine control (NC). also signals the number of cutting edges (K) of the tool (WZG) to the measuring device (MV), and/or the measuring device (MV) signals results determined by it to the machine control (NC) of the machine tool.

16. Device for checking a tool (WZG) to be used in a numerically controlled machine tool, with
a measuring device (MV), having
- a light emitter (LS), set up for emitting a measuring beam (MS) for contactless scanning of the tool (WZG) by means of the measuring beam (MS), and
- a light beam receiver (LE), set up for receiving the measuring beam (MS) and for outputting a shadowing signal (S1) representative of a degree of shadowing of the measuring beam (MS) by the tool (WZG);
a control and evaluation unit (ECU), programmed and set up for
- receiving and processing the shading signal (S1) from the light beam receiver (LE);
- receiving and processing a signal from a control unit (NC) of the machine tool about the rotation of the tool (WZG) and movement of the rotating tool (WZG) relative to the measuring beam (MS), the signal comprising
a predetermined rotational speed (n) and an at least approximately constant feed speed (v) for the tool (WZG);
- initiating a message to the control system (NC) of the machine tool that the tool (WZG) has reached a starting position in which the or each cutting edge (K) of the tool (WZG) plunges into the measuring beam (MS) and shades the latter to such an extent that a lower and an upper switching threshold (USS, OSS) of a measuring range of the control and evaluation device is reached;
- causing the tool (WZG) rotating at the predetermined speed (n) to move at the at least approximately constant feed speed (v), starting from this starting position out of the measuring beam (MS), or from a starting position above the upper switching threshold (OSS) into the measuring beam (MS), until the shortest cutting edge (K) falls below the lower switching threshold (USS), and
- detecting the shadowing signal (S1) generated by the or each cutting edge (K) of the tool (WZG) during shadowing of the measuring beam (MS) with respect to its local and temporal occurrence during the movement of the rotating tool (WZG) out of the measuring beam (MS); the device being **characterized in that** the control and evaluation unit (ECU) is furthermore programmed and set up for
- determining the event that, at least for one cutting edge (K) of the tool (WZG), the shading signal (S1) does not fall below the lower switching threshold (USS) of the measuring range (MB) and does not exceed the upper switching threshold (OSS) of the measuring range, so that a maximum shading signal (S1) generated during the movement of the rotating tool (WZG) out of the measuring beam (MS) is above the lower and below the upper switching threshold (USS, OSS) of the measuring range; wherein
- the feed speed (v) is determined in relation to the measuring range of the control and evaluation unit (ECU), which is dependent on a beam transverse dimension of the measuring beam (MS), in such a way that at least one of the cutting edges (K) produces a respective maximum shading signal (S1) located above the lower and below the upper switching threshold (USS, OSS) of the measuring range at different positions during a number of revolutions of the rotating tool (WZG) sufficient for an evaluation;
- for each revolution of the rotating tool (WZG), the determined maximum shading signals (S1) of each cutting edge (K)
-- differ by an at least approximately constant offset amount according to the temporal displacement and local change of the tool (WZG), and
-- are superimposed to form a resulting representative shading signal for this cutting edge (K).

17. Device according to claim 16, in which the control and evaluation unit (ECU) is programmed and set up to carry out one or more of the method steps of dependent claims 2 - 15.

## Revendications

1. Procédé de contrôle d'un outil (WZG) à utiliser dans une machine-outil à commande numérique, comprenant les étapes suivantes:
a) mise à disposition d'un dispositif de mesure (MV), présentant
- un émetteur de lumière (LS), aménagé pour émettre un faisceau de mesure (MS) pour un balayage sans contact de l'outil (WZG) au moyen du faisceau de mesure (MS), et
- un récepteur de faisceau de lumière (LE), aménagé pour recevoir le faisceau de mesure (MS) et pour émettre un signal d'occultation (S1) représentatif d'une mesure d'une occultation du faisceau de mesure (MS) par l'outil (WZG);
b) mise à disposition d'un dispositif d'évaluation (ECU), conçu pour recevoir et traiter le signal d'occultation (S1) provenant du récepteur de faisceau lumineux (LE) ;
c) mise en rotation de l'outil (WZG);
d) déplacement de l'outil rotatif (WZG) par rapport au faisceau de mesure (MS) jusqu'à ce que l'outil (WZG) atteigne une position de départ dans laquelle le ou chaque tranchant (K) de l'outil (WZG) plonge dans le faisceau de mesure (MS) en l'occultant suffisamment pour qu'un seuil de commutation inférieur et un seuil de commutation supérieur (USS, OSS) d'une zone de mesure du dispositif d'évaluation (ECU) soient atteints;
e) déplacement de l'outil (WZG) tournant à une vitesse de rotation (n) prédéterminée à une vitesse d'avance (v) au moins approximativement constante, en partant de cette position de départ hors du faisceau de mesure (MS) ou en entrant dans le faisceau de mesure (MS) à partir d'une position de départ située au-dessus du seuil de commutation supérieur (OSS), jusqu'à ce que le tranchant le plus court passe en dessous du seuil de commutation inférieur (USS), et
f) détection du signal d'occultation (S1) généré par le ou chaque tranchant (K) de l'outil (WZG) lors de l'occultation du faisceau de mesure (MS) en ce qui concerne son apparition locale et temporelle pendant le déplacement de l'outil rotatif (WZG) hors du faisceau de mesure (MS) ; le procédé étant **caractérisé par**:
g) déterminer l'événement selon lequel, au moins pour un tranchant (K) de l'outil (WZG), le signal d'occultation (S1) ne passe pas en dessous du seuil de commutation inférieur (USS) de la plage de mesure et ne dépasse pas le seuil de commutation supérieur (OSS) de la plage de mesure, de sorte qu'un signal d'occultation maximal (S1) généré pendant le déplacement de l'outil rotatif (WZG) hors du faisceau de mesure (MS) se trouve au-dessus du seuil de commutation inférieur et au-dessous du seuil de commutation supérieur (USS, OSS) de la plage de mesure;
la vitesse d'avance (v) étant déterminée par rapport à la plage de mesure du dispositif d'évaluation (ECU), qui dépend d'une dimension transversale du faisceau de mesure (MS), de telle sorte qu'au moins l'un des tranchants (K) provoque, pendant un nombre suffisant de rotations de l'outil rotatif (WZG) pour une évaluation, un signal d'obscurcissement maximal (S1) respectif situé au-dessus du seuil de commutation inférieur et au-dessous du seuil de commutation supérieur (USS, OSS) de la plage de mesure;
- à chaque rotation de l'outil rotatif (WZG), les signaux d'ombre maximum (S1) déterminés pour chaque arête de coupe (K)
-- se différencient d'une valeur de décalage au moins approximativement constante en fonction du décalage temporel et de la modification locale de l'outil (WZG), et
-- sont superposés pour former un signal d'ombre représentatif résultant pour cette arête de coupe (K).

2. Procédé selon la revendication 1, comprenant les étapes suivantes :
- génération d'un point de commutation (AS) à partir des signaux d'ombrage représentatifs résultants, et
- sortie du point de commutation (AS) du dispositif de mesure (MV) vers la commande de machine (NC) de la machine-outil.

3. Procédé selon la revendication 1 ou 2, comprenant les étapes consistant à:
- signaler au dispositif de mesure (MV) la vitesse de rotation (n) de l'outil rotatif (WZG) et la vitesse d'avance (v) constante à partir de la commande de machine (ECU) de la machine-outil.

4. Procédé selon l'une quelconque des revendications 1 à 3, comprenant les étapes consistant à :
- déterminer un changement de position *deltaS* du tranchant (K) de l'outil (WZG) dans la plage de mesure analogique lors d'une rotation complète de l'outil (WZG) comme *deltaS* = *v * T*, où *T = 1* / *vitesse de rotation [min⁻¹* ] de l'outil (WZG), et *v* [mm/min] est la vitesse d'avance (v) constante de l'outil (WZG).

5. Procédé selon l'une des revendications 1 à 4, dans lequel un enregistrement temporel et local avec évaluation des signaux d'occultation (S1) par le dispositif de mesure (MV) commence lorsqu'un tranchant le plus court (K) de l'outil (WZG) ne passe plus en dessous d'un seuil de commutation inférieur (USS) dans la plage de mesure analogique.

6. Procédé selon l'une des revendications 1 à 5, dans lequel la vitesse d'avance *v [mm*/*min]* de l'outil (WZG) est choisie par rapport à la plage de mesure analogique disponible de telle sorte que chaque tranchant (K) de l'outil (WZG) occulte le faisceau de mesure (MS) sur au moins un tour ou plusieurs tours à des positions décalées dans la plage de mesure analogique, de sorte que les signaux d'occultation maximaux (S1) de cette arête de coupe (K), déterminés par tour, se différencient d'une modification de position *deltaS = v * T*, en fonction du décalage temporel et de la modification locale de l'outil (WZG), où *T = 1* / *vitesse de rotation [min⁻¹* ] de l'outil (WZG), et *v [mm*/*min]* est la vitesse d'avance (v) de l'outil (WZG), et où les signaux d'ombre (S1) de chaque arête de coupe (K) sont superposés en un signal d'ombre représentatif résultant pour cette / chaque arête de coupe (K).

7. Procédé selon l'une des revendications 1 à 6, dans lequel toutes les arêtes de coupe (K) de l'outil (WZG) parcourent sur au moins un tour ou plusieurs tours la plage de mesure analogique entre le seuil de commutation inférieur et le seuil de commutation supérieur (USS, OSS) du faisceau de mesure (MS), la distance relative de chaque arête de coupe (K) à son arête de coupe (K) suivante étant déterminée par la valeur de décalage constante du changement de position *deltaS(K) = v * T*/ *K, K [sans unité] étant* le nombre d'arêtes de coupe (K) de l'outil réparties de préférence symétriquement sur la circonférence, *T = 1* / *vitesse de rotation [min⁻¹* ] de l'outil, et *v [mm*/*min]* étant la vitesse d'avance (v) de l'outil (WZG).

8. Procédé selon l'une des revendications 1 à 6, dans lequel toutes les arêtes de coupe (K) de l'outil (WZG) parcourent, pendant un tour ou plusieurs tours, la plage de mesure analogique entre le seuil de commutation inférieur et le seuil de commutation supérieur (USS, OSS) du faisceau de mesure (MS), la distance relative d'une / de chaque arête de coupe (K) à la première arête de coupe (la plus courte) (K) étant déterminée à un instant quelconque *tk > t0 [µs, min]* est déterminé par la valeur de décalage relative du changement de position *deltaS(t) = v * (tk* - *t0) = v * t = v * N * T [µm],* où *t0 = 0 [µs, min]* caractérise l'instant du début de l'enregistrement avec évaluation, *tk [µs, min]* est l'instant à considérer avec un signal d'ombre maximal (S1) d'un tranchant (K), *t [µs, min] est* la durée écoulée depuis l'instant *t0, N [sans unité]* est le nombre de tours complets et/ou de fractions de tours depuis le début de l'enregistrement avec évaluation à l'instant *t0 = 0 [µs, min], T = 1* / *vitesse de rotation [min⁻¹* ] de l'outil, et *v [mm*/*min]* est la vitesse d'avance (v) de l'outil (WZG).

9. Procédé selon l'une des revendications 1 à 8, dans lequel l'enregistrement temporel et local des signaux d'ombrage (S1) se termine par la sortie d'un point de commutation (AS) vers la commande de machine (ECU), et dans lequel la génération du point de commutation (AS) à partir des signaux d'ombrage représentatifs résultants, et/ou la sortie du point de commutation (AS) vers la commande de machine (ECU) de la machine-outil a lieu lorsque le dernier tranchant (K) a dépassé le seuil de commutation supérieur (OSS) de la plage de mesure, et/ou le moment de la sortie du point de commutation (AS) est mémorisé dans la commande de machine (ECU) de la machine-outil ou dans le dispositif de mesure (MV).

10. Procédé selon l'une des revendications 1 à 9, dans lequel, à l'instant d'occultation maximale du faisceau de mesure (MS) par un tranchant (K), on démarre une horloge avec un temps d'attente *E [µs]* de l'occultation maximale suivante par le même tranchant (K), *E* étant fonction de la vitesse de rotation (n) de l'outil (WZG) par minute, et/ou cette horloge est remise à zéro et redémarrée tant qu'une autre arête de coupe (K) provoque une ombre sur le faisceau de mesure (MS), et si l'horloge expire sans qu'une ombre sur le faisceau de mesure (MS) soit détectée, le point de commutation (AS) est émis.

11. Procédé selon l'une quelconque des revendications 1 à 10, dans lequel on élimine dans le signal d'occultation (S1) les informations qui n'ont pas leur point bas entre les seuils de commutation supérieur et inférieur (OSS, USS) de la plage de mesure.

12. Procédé selon l'une des revendications 1 à 11, dans lequel un signal de sortie comprenant des signaux d'occultation (S1) issus de *M* rotations de l'outil (WZG) est formé à partir d'un signal d'entrée comprenant des signaux d'occultation (S1) issus de *U* rotations, avec *U > = M,* et/ou dans lequel, en particulier pour chaque valeur dans le signal de sortie, une ou plusieurs valeurs issues du signal d'entrée sont regroupées en une valeur.

13. Procédé selon l'une quelconque des revendications 1 à 12, dans lequel, dans le signal de sortie, des perturbations singulières sont éliminées de la séquence des signaux d'occultation (S1) de chaque arête (K), dans lequel
- les signaux d'occultation (S1) sont analysés pour détecter des événements récurrents afin de reconnaître leur périodicité,
- des séquences de signaux d'occultation (S1) correspondant à une rotation de l'outil (WZG) sont regroupées sous forme de blocs de signaux et corrélées avec les séquences de signaux d'occultation (S1) d'une ou plusieurs rotations suivantes de l'outil (WZG),
- à chaque instant d'échantillonnage, les différentes valeurs de signal dans les séquences des signaux d'ombre (S1) sont comparées entre elles, le minimum est sélectionné et celui-ci est émis comme valeur de sortie, le maximum, la valeur moyenne, la médiane ou similaire étant en outre ou alternativement utilisé pour déterminer la valeur représentative résultante à cet instant d'échantillonnage est évaluée.

14. Procédé selon l'une quelconque des revendications 1 à 13, dans lequel une erreur temporelle dans la sortie du point de commutation (AS) est compensée par
- le calcul de la longueur de chaque arête (K), y compris la longueur de l'arête (K) pour laquelle le point de commutation (AS) a été sorti vers la commande de machine (ECU),
- la comparaison d'une longueur calculée pour l'instant de sortie du point de commutation avec la longueur de l'arête (K) déterminée à partir de l'ombrage pour laquelle ce point de commutation (AS) a été sorti, et
- la signalisation de la différence à la commande de machine (NC) en tant que valeur de correction.

15. Procédé selon l'une des revendications 1 à 14, dans lequel le dispositif de mesure (MV) et la commande de machine (NC) de la machine-outil communiquent sans fil ou par l'intermédiaire d'une ligne de données afin d'échanger les informations et les signaux nécessaires, la commande de machine (NC) de la machine-outil transmettant des paramètres importants pour la mesure, tels que la vitesse de rotation (n) et la vitesse d'avance (v) de l'outil (WZG) et, le cas échéant, les données de mesure (MV). le nombre d'arêtes de coupe (K) de l'outil (WZG) au dispositif de mesure (MV), et/ou le dispositif de mesure (MV) signale les résultats qu'il a déterminés à la commande de machine (NC) de la machine-outil.

16. Dispositif de contrôle d'un outil (WZG) à utiliser dans une machine-outil à commande numérique, avec
un dispositif de mesure (MV), présentant
- un émetteur de lumière (LS), aménagé pour émettre un faisceau de mesure (MS) pour un balayage sans contact de l'outil (WZG) au moyen du faisceau de mesure (MS), et
- un récepteur de faisceau de lumière (LE), aménagé pour recevoir le faisceau de mesure (MS) et pour émettre un signal d'occultation (S1) représentatif d'une mesure d'une occultation du faisceau de mesure (MS) par l'outil (WZG);
un dispositif de commande et d'évaluation (ECU), programmé et agencé pour
- recevoir et traiter le signal d'occultation (S1) provenant du récepteur de faisceau lumineux (LE) ;
- recevoir et traiter un signal provenant d'une commande (NC) de la machine-outil concernant la rotation de l'outil (WZG) et le déplacement de l'outil rotatif (WZG) par rapport au faisceau de mesure (MS), le signal comprenant une vitesse de rotation (n) prédéterminée et une vitesse d'avance (v) au moins approximativement constante pour l'outil (WZG);
- déclencher un message à la commande (NC) de la machine-outil indiquant que l'outil (WZG) atteint une position de départ dans laquelle le ou chaque tranchant (K) de l'outil (WZG) plonge dans le faisceau de mesure (MS) en l'occultant suffisamment pour qu'un seuil de commutation inférieur et un seuil de commutation supérieur (USS, OSS) d'une zone de mesure du dispositif de commande et d'évaluation soient atteints;
- provoquer un déplacement de l'outil (WZG) tournant à la vitesse de rotation (n) prédéterminée à la vitesse d'avance (v) au moins approximativement constante, à partir de cette position de départ hors du faisceau de mesure (MS), ou à partir d'une position de départ au-dessus du seuil de commutation supérieur (OSS) dans le faisceau de mesure (MS), jusqu'à ce que le tranchant le plus court (K) passe en dessous du seuil de commutation inférieur (USS), et
- détecter le signal d'occultation (S1) généré par la ou chaque arête de coupe (K) de l'outil (WZG) lors de l'occultation du faisceau de mesure (MS) en ce qui concerne son apparition locale et temporelle pendant le déplacement de l'outil rotatif (WZG) hors du faisceau de mesure (MS) ; le dispositif étant **caractérisé en ce que** le dispositif de commande et d'évaluation (ECU) est en outre programmé et agencé pour
- déterminer l'événement selon lequel, au moins pour un tranchant (K) de l'outil (WZG), le signal d'occultation (S1) ne passe pas en dessous du seuil de commutation inférieur (USS) de la zone de mesure (MB) et ne passe pas au-dessus du seuil de commutation supérieur (OSS) de la zone de mesure, de sorte qu'un signal d'occultation maximal (S1) généré pendant le déplacement de l'outil rotatif (WZG) hors du faisceau de mesure (MS) se trouve au-dessus du seuil de commutation inférieur et au-dessous du seuil de commutation supérieur (USS, OSS) de la plage de mesure ; la vitesse d'avance (v) étant déterminée par rapport à la plage de mesure du dispositif de commande et d'évaluation (ECU), qui dépend d'une dimension transversale du faisceau de mesure (MS), de telle sorte qu'au moins l'un des tranchants (K) provoque, pendant un nombre suffisant de rotations de l'outil rotatif (WZG) pour une évaluation, un signal d'occultation maximal (S1) respectif situé au-dessus du seuil de commutation inférieur et au-dessous du seuil de commutation supérieur (USS, OSS) de la plage de mesure ;
- à chaque rotation de l'outil rotatif (WZG), les signaux d'ombre maximale (S1) déterminés pour chaque arête de coupe (K)
-- se différencient d'une valeur de décalage au moins approximativement constante, en fonction du décalage temporel et de la modification locale de l'outil (WZG), et
-- sont superposés pour former un signal d'ombrage représentatif résultant pour ce tranchant (K).

17. Dispositif selon la revendication 16, dans lequel le dispositif de commande et d'évaluation (ECU) est programmé et agencé pour exécuter une ou plusieurs des étapes de procédé des revendications dépendantes 2 à 15.
